# EUROPÄISCHE PATENTSCHRIFT

(11) **EP 2 986 573 B1**
(45) Veröffentlichungstag und Bekanntmachung des Hinweises auf die Patenterteilung: **07.06.2017**
(21) Anmeldenummer: 14716835.5
(22) Anmeldetag: 11.04.2014
(51) Int. Cl.: C03C 3/19, C03C 3/064, C03C 3/097, B23K 1/00, C03C 4/20, C03C 8/02, C03C 8/04, C03C 8/08, C03C 8/24, H01G 11/80, H01M 2/06, B23K 1/19, H01M 2/08, H01M 10/00

(54) **DURCHFÜHRUNG**
FEED-THROUGH
PASSAGE

(30) Priorität: 15.04.2013 DE 102013006463
(43) Veröffentlichungstag der Anmeldung: 24.02.2016
(73) Patentinhaber: Schott AG, 55122 Mainz (DE)
(72) Erfinder: DAHLMANN, Ulf, 84034 Landshut (DE); KROLL, Frank, 84036 Landshut (DE); PICHLER-WILHELM, Sabine, 84034 Landshut (DE); WIMMER, Sabrina, 84032 Altdorf (DE); WITTE, Jörg, 64319 Pfungstadt (DE)
(74) Vertreter: Sawodny, Michael-Wolfgang
(86) Internationale Anmeldenummer: PCT/EP2014/057371
(87) Internationale Veröffentlichungsnummer: WO 2014/170219

(56) Entgegenhaltungen:
- WO-A1-2012/110242
- DE-A1-102011 012 430
- DE-B- 1 049 063
- US-A- 3 240 661

## Beschreibung

Die Erfindung betrifft eine Durchführung für eine Speichereinrichtung, insbesondere eine Batteriedurchführung, bevorzugt für eine Batterie, insbesondere eine Lithium-Ionen-Batterie, einen Lithium-Ionen-Akkumulator oder einen Kondensator, sowie die Verwendung von Dichtungsglas zur Durchführung eines metallischen Leiters in das Gehäuse einer Speichereinrichtung.

Lithium-Ionen-Batterien und -Akkumulatoren sind für eine Vielzahl verschiedener Anwendungen vorgesehen, wie beispielsweise tragbare elektronische Geräte, Mobiltelefone, Motorwerkzeuge sowie insbesondere Elektrofahrzeuge. Lithium-Ionen-Batterien, insbesondere für Anwendungen in einer Automobil-Umgebung weisen in der Regel eine Vielzahl von einzelnen Batteriezellen auf, die in Reihe bzw. in Serie geschaltet werden. Die in Serie geschalteten Batteriezellen werden zu sogenannten Batteriepacks zusammengefasst, mehrere Batteriepacks dann zu einem Batteriemodul, das auch als Lithium-Ionen-Batterie bezeichnet wird. Jede einzelne Batteriezelle besitzt Elektroden, die aus einem Gehäuse der Batteriezelle herausgeführt werden. Diese Batterien können traditionelle Energiequellen, wie beispielsweise Blei-Säure-Batterien, Nickel-Cadmium-Batterien oder Nickel-Metallhydrid-Batterien, ersetzen.

Insbesondere für bestimmte Anwendungen, vor allem im Bereich der Automobilindustrie, aber auch in Flugzeugen, werden für Batterien, insbesondere Lithium-Ionen-Batterien und -Akkumulatoren, häufig Leichtmetalle oder Leichtmetalllegierungen, wie z.B. Aluminiumlegierungen, als Gehäusematerial der Batterie oder als elektrische Leiter eingesetzt. Diese Anwendung im Automobilbereich wirft eine Vielzahl von Problemen auf, wie Korrosionsbeständigkeit, Beständigkeit bei Unfall oder Schwingungsfestigkeit. Ein weiteres Problem ist die hermetische Dichtheit der Batterie, insbesondere der Lithium-Ionen-Batterie über einen langen Zeitraum. Die Dichtheit beeinträchtigen können z. B. Undichtigkeit im Bereich der Elektroden der Batterie beziehungsweise der Elektrodendurchführung der Batterie, ein Batteriekurzschluss oder Temperaturänderungen, die zu einer verminderten Batterielebensdauer führen. Ein zusätzliches Problem von Batteriedurchführungen ist die Instabilität gegenüber den aggressiven Batterieelektrolyten, insbesondere gegenüber nicht wässrigen Elektrolyten, wie sie beispielsweise in Lithium-Ionen-Akkumulatoren Verwendung finden.

Um eine bessere Beständigkeit bei Unfall sicherzustellen, schlägt die DE 101 05 877 A1 beispielsweise ein Gehäuse für eine Lithium-Ionen-Batterie vor, wobei das Gehäuse einen Metallmantel umfasst, der auf beiden Seiten offen ist und verschlossen wird. Der Stromanschluss ist durch einen Kunststoff isoliert. Nachteilig an den Kunststoffisolierungen sind die limitierte Temperaturbeständigkeit und die unsichere Dichtheit während der Lebensdauer.

Weiterhin ist es bekannt für metallisch-elektrische Durchführungen, die neben der elektrischen Isolation der Leiter auch eine hermetische Dichtfunktion aufweisen müssen, sog. Einschmelzgläser bzw. Glaslote zu verwenden. Im Stand der Technik ist eine Vielzahl möglicher Ausführungsformen hierfür beschrieben:

So offenbaren die US 6,037,539 A und die US 5,965,469 A eine Hochfrequenzdurchführung (HF-Durchführung), bei der ein eisenhaltiger bzw. ein nicht eisenhaltiger Leiter in einer Aluminium-Phosphatglas- bzw. Alkali-Aluminium-Phosphatglas-Zusammensetzung durch ein Gehäuseteil, umfassend Aluminium, hindurchgeführt wird. Es sind jedoch keine Batteriedurchführungen beschrieben.

Ferner bezieht sich die WO 03/061034 A1 (EP 1 464 089 A1) auf eine Anordnung mit einer Glas-zu-Metall-Abdichtung zur Verwendung in Verbindung mit einem Lithium-Ionen-Elektrolyten, umfassend einen metallischen Körper, der ein chemisch beständiges Metall aufweist, einen chemisch beständigen metallischen elektrisch leitenden Stift und ein Glasmaterial, angeordnet zwischen dem metallischen Körper und dem Stift und unter elektrischer Isolation beider, wobei das Glasmaterial eine phosphatreiche Zusammensetzung, wie ALSG-32-Glas, aufweist.

Die DE 10 2011 012 430 A1 und die WO 2012/110244 A1 beschreibt eine Durchführung mit einem Grundkörper, insbesondere in Form eines bevorzugt scheibenförmigen Metallteils, wobei der Grundkörper wenigstens eine Öffnung aufweist, durch die wenigstens ein im Wesentlichen stiftförmiger Leiter in einem Glas- oder Glaskeramikmaterial hindurchgeführt wird, wobei der Grundkörper ein niedrig schmelzendes Material, insbesondere ein Leichtmetall, bevorzugt Aluminium oder AlSiC, umfasst und das Glas- oder Glaskeramikmaterial derart gewählt ist, dass die Verschmelztemperatur des Glas- oder Glaskeramikmaterials mit dem niedrig schmelzenden Material unterhalb der Schmelztemperatur des niedrig schmelzenden Grundkörpers liegt. Das Glas- oder Glaskeramikmaterial ist beispielsweise ausgewählt aus den Glasfamilien Silikattitanate, Sulphophosphate, Telluride, Borate, Vanadate, Fluoride, Phosphate oder Silikate.

Die WO 2012/110242 A1 und die DE 10 2009 030 951 beschreiben jeweils eine Durchführung, insbesondere für eine Lithium-Ionen-Batterie, wobei ein im Wesentlichen stiftförmiger Leiter durch eine Öffnung in einem Grundkörper in einem Glas oder Glaskeramikmaterial hindurchgeführt wird. Als Glas- oder Glaskeramikmaterial wird bevorzugt eines mit hohem Phosphatgehalt verwendet.

Aus der DE 1049063 B sind Gläser zum direkten Verschmelzen mit Metallen und Legierungen mit hoher thermischer Ausdehnung bekannt geworden, die einen Gehalt von 4 bis 30 Gew.-% TiO₂ umfassen, wobei die aus der DE 1049063 B bekannten Gläser zwingend 2 bis 8 Gew.-% SrO aufweisen. SrO wird gerne eingesetzt, um Schmelztemperaturen und die Glasübergangstemperatur zu verringern. Höhere Gehalte von SrO können ferner eine Erhöhung des thermischen Ausdehnungskoeffizienten bewirken. Dennoch ist SrO ein teurer Rohstoff und die Erfinder haben erkannt, dass der Einsatz höherer Gehalte an SrO negative Eigenschften bzgl. der chemischen Beständigkeit der Gläser haben kann, insbes. der Säurebeständigkeit.

Die US 3,240,661A zeigt eine Glaszusammensetzung, die zum Abdichten von hochausdehnenden Metallen eingesetzt werden können, insbesonder Glas-Metall-Dichtungen.

Als geeignete Glaslote für die genannten Anwendungsbeispiele werden im Stand der Technik daher häufig Glassysteme beschrieben, die einen relativ hohen Phosphatanteil, beispielsweise einen Phosphatanteil > 30 Gew.-%, aufweisen. Diese phosphathaltigen Glaslote zeichnen sich beispielsweise dadurch aus, dass sie einen ähnlich hohen CTE (coefficient of thermal expansion) aufweisen wie Aluminiumlegierungen, der im Bereich von 15 bis 25 x 10⁻⁶ 1/K liegt. Aluminiumlegierungen weisen aufgrund ihrer Zusammensetzung beispielsweise CTEs zwischen 20 bis 26 x 10⁻⁵ 1/K auf; dies richtet sich jedoch im Wesentlichen nach den Hauptlegierungsbestandteilen, wie z.B. Si, Mg, Cu, Mn, Zn...

Gleichzeitig zeigen diese Glassysteme häufig eine relativ niedrige Transformationstemperatur (Tg), die deutlich unter dem Schmelzpunkt bzw. dem Schmelzintervall von Aluminiumlegierungen liegen. Dies macht sie unter anderem für die vorgesehene Anwendung verwendbar. Typischerweise liegen die Transformationstemperaturen (Tg) der Glaslote hierbei zwischen 300 und 450°C.

Phosphathaltige Gläser werden als Glaslote im Stand der Technik verwendet, da diese gegenüber einem wasserfreien Batterieelektrolyten sehr gut beständig sind. Der Elektrolyt besteht beispielsweise im Wesentlichen aus einer Mischung von LiPF₆ und organischen Carbonaten. Ein Test zur Bestimmung der Beständigkeit eines Glaslots gegenüber einem Elektrolyten, d.h. wieviel Material vom Glaslot durch den Elektrolyt aufgelöst wird, ist die sog. Auslaugung. Typische Auslaugungswerte sind beispielsweise in der WO 2012/110242 A1 in Tabelle 1 auf S. 19 angegeben.

Die Herstellung von Gläsern, die solch hohe Anteile von Phosphor enthalten, ist jedoch mit erheblichen Schwierigkeiten verbunden. Die Phosphor- und/oder Phosphatanteile können z.B. beim Einschmelzvorgang das verwendete Tiegel-und/oder Wannenmaterial angreifen, wodurch das erschmolzene Glas einerseits verunreinigt werden kann, andererseits aber auch die Lebensdauer der Glasschmelzeinrichtung beträchtlich reduziert wird. Die Phosphor- und/oder Phosphatanteile können zudem leicht aus der Glasschmelze verdampfen, wodurch aufwendige Luftfilteranlagen erforderlich werden, damit diese Bestandteile nicht in die Umwelt gelangen. Dies erhöht den Herstellungsaufwand erheblich. Weiterhin müssen die Filterrückstände umweltgerecht entsorgt werden.

Ausgehend von den geschilderten Nachteilen des Standes der Technik ist es daher Aufgabe der Erfindung, eine Durchführung der vorgenannten Art bereitzustellen, die mit einem Dichtungsglas herstellbar ist, welches mit reduziertem Herstellungsaufwand und umweltfreundlicher erzeugbar ist.

Erfindungsgemäß wird die Aufgabe durch die Lehren der unabhängigen Ansprüche gelöst.

Vorteilhafte Weiterbildungen der Erfindung sind Gegenstand der Unteransprüche.

Gemäß einem ersten Aspekt der Erfindung wird somit eine Durchführung für eine Speichereinrichtung, wie eine elektrische Energieerzeugungs- und/oder Energiespeichereinrichtung, insbesondere Batteriedurchführung, bevorzugt für eine Lithium-Ionen-Batterie, einen Lithium-Ionen-Akkumulator oder einen Kondensator, angegeben, die einen Grundkörper umfasst, wobei der Grundkörper wenigstens eine Öffnung aufweist, durch die ein Leiter, insbesondere ein im Wesentlichen stiftförmiger Leiter, in einem elektrisch isolierenden Material, welches ein Dichtungsglas umfasst oder hieraus besteht, hindurchgeführt wird, wobei der Grundkörper ein Leichtmetall und/oder eine Leichtmetall-Legierung, bevorzugt ausgewählt aus Aluminium, Magnesium, Titan, einer Aluminiumlegierung, einer Magnesiumlegierung, einer Titanlegierung, wie Ti6246, Ti6242, Ti6Al4V und/oder Ti6Al7Nb, oder AlSiC, umfasst oder hieraus besteht, unter Ausbildung einer stoffschlüssigen Verbunds des Grundkörpers und/oder des Leiters mit dem Dichtungsglas, wobei das Dichtungsglas ein Titanatglas aufweist oder hieraus besteht.

Die elektrische Durchführung soll erfindungsgemäß in elektrischen Energieerzeugungs- und/oder elektrischen Energiespeichereinrichtungen, bevorzugt in Lithium-Ionen-Batterien Verwendung finden. Als Batterie im Sinne der Erfindung wird hierbei sowohl eine Einwegbatterie, die nach ihrer Entladung entsorgt und/oder recycled wird, als auch ein Akkumulator verstanden.

Erfindungsgemäß umfasst oder besteht das Dichtungsglas in Form eines Titanatglases, durch das der Leiter hindurchgeführt wird, aus den nachfolgenden Komponenten in Gew.-%:

| | |
|---|---|
| B₂O₃ | 0 - < 3 Gew.-% |
| Li₂O | 0 - 3 Gew.-%, insbesondere 1 - 3 Gew.-% |
| Al₂O₃ | 0 - 2 Gew.-%, insbesondere 0 - < 2 Gew.-% |
| BaO | 0 - < 11 Gew.-% |
| CaO | 0 - 1 Gew.-% |
| CuO | 0 - < 7 Gew.-% |
| Fe₂O₃ | 0 - < 5 Gew.-% |
| K₂O | 10 - 27 Gew.-% |
| MgO | 0 - < 0,5 Gew.-% |
| Na₂O | 12 - 22 Gew.-% |
| Nb₂O₃ | 0 - < 0,5 Gew.-% |
| P₂O₅ | 0 - 3 Gew.-%, insbesondere 1 - 3 Gew % |
| PbO | 0 - < 0,5 Gew.-% |
| SO₃ | 0 - < 0,5 Gew.-% |
| Sb₂O₃ | 0 - < 7 Gew.-% |
| SiO₂ | 24 - 44 Gew.-% |
| SnO₂ | 0 - < 4 Gew.-% |
| SrO | 0 - < 2,5 Gew.-%, insbesondere 0 - < 2 Gew.-% , insbesondere 0 - 0,5 Gew.-% |
| TiO₂ | 5 - 28 Gew.-% |
| V₂O₅ | 0 - 13 Gew.-%, insbesondere 1 - 13 Gew.-%, insbesondere >5 - 13 Gew.-% |
| ZnO | 0 - < 0,5 Gew.-% |
| ZrO₂ | 0 - 1 Gew.-%. |
| Bi₂O₃ | 0 - 19 Gew.-%, insbesondere 0 - 18 Gew.-%, insbesondere 0 - < 10 Gew.-%. |

Gemäß einer besonders bevorzugten Ausführungsform der Erfindung liegt der Gehalt für BaO im Titanatglas im Bereich von 0 - 4 Gew.-%, noch bevorzugter 0 - < 0,5 Gew.-%. Vorteilhafte Obergrenzen von BaO sind (in jeweils Gew.-% auf Oxidbasis) z. B. auch 3,5%, 3%, 2,5%, 2,0%, 1,5%, 1,0% und/oder 0,5%. Diese sind selbstverständlich mit der Untergrenze von 0 Gew.-% kombinierbar.

Gemäß einer besonders bevorzugten Ausführungsform der Erfindung liegt der Gehalt für CuO im Titanatglas im Bereich von 0 - < 6 Gew.-%, noch bevorzugter 0 - < 0,5 Gew.-%. Vorteilhafte Obergrenzen von CuO sind (in jeweils Gew.-% auf Oxidbasis) z. B. auch 5,5%, 5,0%, 4,5%, 4,0%, 3,5%, 3,0%, 2,5%, 2,0%, 1,5%, 1,0% und/oder 0,5%. Diese sind selbstverständlich mit der Untergrenze von 0 Gew.-% kombinierbar.

Gemäß einer besonders bevorzugten Ausführungsform der Erfindung liegt der Gehalt für Fe₂O₃ im Titanatglas im Bereich von 0 - < 0,5 Gew.-%. Vorteilhafte Obergrenzen von Fe₂O₃ sind (in jeweils Gew.-% auf Oxidbasis) z. B. auch 0,4%, 0,3%, 0,2% und/oder 0,1%. Diese sind selbstverständlich mit der Untergrenze von 0 Gew.-% kombinierbar.

Gemäß einer besonders bevorzugten Ausführungsform der Erfindung liegt der Gehalt für K₂O im Titanatglas im Bereich von 10 - 20 Gew.-%, noch bevorzugter 10 - 14 Gew.-%. Vorteilhafte Obergrenzen von K₂O sind (in jeweils Gew.-% auf Oxidbasis) z. B. auch 19%, 18%, 17%, 16%, 15%, 14%, 13%, 12% und/oder 11%. Diese sind selbstverständlich mit der Untergrenze von 10 Gew.-% kombinierbar.

Gemäß einer weiteren besonders bevorzugten Ausführungsform der Erfindung liegt der Gehalt im Titanatglas für Na₂O im Bereich von 12 - 20 Gew.-%, insbesondere bevorzugt 12 - 18 Gew.-%. Vorteilhafte Obergrenzen von Na₂O sind (in jeweils Gew.-% auf Oxidbasis) z. B. auch 19%, 18%, 17%, 16%, 15%, 14%, und/oder 13%. Diese sind selbstverständlich mit der Untergrenze von 12 Gew.-% kombinierbar.

Nach einer besonders bevorzugten Ausführungsform der Erfindung liegt der Gehalt für Sb₂O₃ im Titanatglas im Bereich von 0 - < 0,5 Gew.-%, insbesondere bevorzugt bei 0 Gew.-%. Vorteilhafte Obergrenzen von Sb₂O₃ sind (in jeweils Gew.-% auf Oxidbasis) z. B. auch 0,4%, 0,3%, 0,2% und/oder 0,1%. Diese sind selbstverständlich mit der Untergrenze von 0 Gew.-% kombinierbar.

Gemäß einer besonders bevorzugten Ausführungsform der Erfindung liegt der Gehalt für SnO₂ im Titanatglas im Bereich von 0 - < 0,5 Gew.-%, insbesondere bevorzugt bei 0 Gew.-%. Vorteilhafte Obergrenzen von SnO₂ sind (in jeweils Gew.-% auf Oxidbasis) z. B. auch 0,4%, 0,3%, 0,2% und/oder 0,1 %. Diese sind selbstverständlich mit der Untergrenze von 0 Gew.-% kombinierbar.

In einer weiterhin besonders bevorzugten Ausführungsform der Erfindung liegt der Gehalt für SiO₂ im Titanatglas im Bereich von 28 - 37 Gew.-%, bevorzugter 29 - 34 Gew.-%. Vorteilhafte Obergrenzen von SiO₂ sind (in jeweils Gew.-% auf Oxidbasis) z. B. auch 36%, 35%, 34%, 33%, 32%, 31%, 30% und/oder 29%. Diese sind selbstverständlich mit der Untergrenze von 28 Gew.-% kombinierbar.

Gemäß einer besonders bevorzugten Ausführungsform der Erfindung liegt der Gehalt für TiO₂ im Titanatglas im Bereich von 13 - 28 Gew.-%, noch bevorzugter 20 - 25 Gew.-%. Vorteilhafte Obergrenzen von TiO₂ sind (in jeweils Gew.-% auf Oxidbasis) z. B. auch 27%, 26%, 25%, 24%, 23%, 22%, 21%, 20%, 19%, 18%, 17%, 16%, 15% und/oder 14%. Diese sind selbstverständlich mit der Untergrenze von 13 Gew.-%, aber auch mit der Untergrenze von 20 Gew.-% für Obergrenzen > 20 Gew.-% kombinierbar.

Nach einer besonders bevorzugten Ausführungsform der Erfindung liegt der Gehalt für V₂O₅ im Titanatglas im Bereich von 2 - 12 Gew.-%, noch bevorzugter 2 - 10 Gew.-%. Besonders bevorzugt ist ein V₂O₅-Anteil im Titanatglas von > 5 bis 13 Gew.-%. Vorteilhafte Obergrenzen von V₂O₅ sind (in jeweils Gew.-% auf Oxidbasis) z. B. auch 12%, 11%, 10%, 9%, 8%, 7%, 6%, 5%, 4% und/oder 3%. Diese sind selbstverständlich mit der Untergrenze von 2 Gew.-%, aber auch mit der Untergrenze von > 5 Gew.-% für Obergrenzen > 5 Gew.-% kombinierbar.

Gemäß einer besonders bevorzugten Ausführungsform der Erfindung liegt der Gehalt für ZrO₂ im Titanatglas im Bereich von 0 - < 0,5 Gew.-%, insbesondere bevorzugt bei 0 Gew.-%. Vorteilhafte Obergrenzen von ZrO₂ sind (in jeweils Gew.-% auf Oxidbasis) z. B. auch 0,4%, 0,3%, 0,2%, und/oder 0,1 %. Diese sind selbstverständlich mit der Untergrenze von 0 Gew.-% kombinierbar.

Nach einer weiteren besonders bevorzugten Ausführungsform der Erfindung ist das erfindungsgemäße Dichtungsglas in Form des Titanatglases bis auf Verunreinigungen frei von PbO und/oder SO₃ und/oder BaO und/oder CuO und/oder ZnO.

Sämtliche dieser besonders bevorzugten und/oder durch "insbesondere" gekennzeichnete Ausführungsformen sind beliebig miteinander kombinierbar, und es sind auch beliebige Kombinationen von ein, mehreren oder sämtlichen dieser Ausführungsformen mit den Komponenten des allgemeinen erfindungsgemäßen Bereichs möglich. So ist es z.B. bei jeder entsprechenden Ausführungsform möglich und im Sinne der Erfindung vorteilhaft, dass der Gehalt der folgenden Komponenten, unabhängig voneinander oder in jeder beliebigen Kombination, wie folgt gewählt wird: Al₂O₃ von 0 - < 2 Gew.-%, SrO von 0 - < 2 Gew.-%, V₂O₅ von > 5 - 13 Gew.-%, Bi₂O₃ von 0 - 18 Gew.-%.

Vorteilhafte Obergrenzen von Al₂O₃ sind (in jeweils Gew.-% auf Oxidbasis) z.B. auch 1,9%, 1,8%, 1,7%, 1,6%, 1,5%, 1,4%, 1,3%, 1,2%, 1,1%, 1,0%, 0,9%, 0,8%, 0,7%, 0,6%, 0,5%, 0,4%, 0,3%, 0,2% und/oder 0,1 %. Diese sind selbstverständlich mit der Untergrenze von 0 Gew.-% kombinierbar.

Vorteilhafte Obergrenzen von SrO sind (in jeweils Gew.-% auf Oxidbasis) z.B. auch 1,9%, 1,8%, 1,7%, 1,6%, 1,5%, 1,4%, 1,3%, 1,2%, 1,1%, 1,0%, 0,9%, 0,8%, 0,7%, 0,6%, 0,5%, 0,4%, 0,3% und/oder 0,2%. Diese sind selbstverständlich mit der Untergrenze von 0 Gew.-% kombinierbar.

Trotz der Reduktion des Gehalts von SrO ist es den Erfindern gelungen, ein für die Anwendung geeignetes Dichtungsglas zur Verfügung zu stellen. Dabei wurde insbesondere der Zielkonflikt gelöst, dass SrO die Schmelzbarkeit und den Fluss des Glases verbessert sowie eine Erhöhung des thermischen Ausdehnungskoeffizienten bewirkt, was insbesondere für Fügeverbindungen mit Leichtmetallen wie z.B. Aluminium wünschenswert ist, andererseits aber die chemische Beständigkeit herabsetzt, insbesondere die Säurebeständigkeit. Durch die erfindungsgemäßen Zusammensetzungsbereiche des Titanatglases ist es gelungen, trotz Verzichts auf diese Vorteile ein geeignetes Glas zur Verfügung zu stellen, welches den Vorteil aufweist, stabiler gegenüber Elektrolyten zu sein, wie sie z.B. in Energiespeicheranwendungen wie Batterie- oder Kondensatoranwendungen vorkommen.

Vorteilhaft ist vorgesehen, dass das erfindungsgemäße Titanatglas frei von SrO ist. Es ist aber mitunter nicht vermeidbar oder bzgl. des Aufwands nicht vertretbar, die durch natürliche Verteilung dieses Stoffs in den gewünschten Komponenten oder durch die Verarbeitung in der Glasherstellung bedingte Kontamination mit dieser Komponente vollständig zu vermeiden. Daher kann es sein, dass auch in dieser Ausführungsform geringe Mengen von SrO in dem erfindungsgemäßen Fügematerial aufgrund dieser Verunreinigungen vorhanden sind. Besonders vorteilhaft übersteigt der Gesamtgehalt von SrO jedoch nicht 0,2 Gew.-%.

Nach einer weiteren bevorzugten Ausführungsform umfasst oder besteht das Dichtungsglas in Form eines Titanatglases, durch das der Leiter hindurchgeführt wird, aus den nachfolgenden Komponenten in Gew.-%:

| | |
|---|---|
| B₂O₃ | 0 - < 3 |
| Li₂O | 1 - 3 |
| Al₂O₃ | 0 - 2 |
| BaO | 0 - 4 |
| CaO | 0 - 1 |
| CuO | 0 - < 6 |
| Fe₂O₃ | 0 - < 0,5 |
| K₂O | 10 - 20 |
| MgO | 0 - < 0,5 |
| Na₂O | 12 - 20 |
| Nb₂O₃ | 0 - < 0,5 |
| P₂O₅ | 1 - 3 |
| PbO | 0 - < 0,5 |
| SO₃ | 0 - < 0,5 |
| Sb₂O₃ | 0 - < 0,5 |
| SiO₂ | 28 - 37 |
| SnO₂ | 0 - < 0,5 |
| SrO | 0 - < 2,5 |
| TiO₂ | 13 - 28 |
| V₂O₅ | >5 - 10 |
| ZnO | 0 - < 0,5 |
| ZrO₂ | 0 - < 0,5 |
| Bi₂O₃ | 0 - 18. |

Bei den angegebenen Dichtungsgläsern handelt es sich um stabile Alkali-Silikat-Titanat-Zusammensetzungen, die einen deutlich niedrigeren Phosphatgehalt als aus dem Stand der Technik bekannte Alkali-Phosphatgläser aufweisen.

Überraschenderweise hat sich gezeigt, dass die erfindungsgemäß verwendeten Dichtungsgläser eine Alternative zu den bekannten Phosphatgläsern darstellen, wobei diese im Vergleich zu einigen Phosphatgläsern deutlich höhere chemische Beständigkeit aufweisen.

Erfindungsgemäß werden für den Grundkörper vorzugsweise Leichtmetalle oder Leichtmetall-Legierungen eingesetzt. Leichtmetalle sind Metalle, die ein spezifisches Gewicht geringer als 5,0 kg/dm³ aufweisen. Bevorzugt liegt das spezifische Gewicht der Leichtmetalle im Bereich 1,0 kg/dm³ bis 3,0 kg/dm³. Im Allgemeinen sind Leichtmetalle niedrig schmelzende Metalle und zeigen Schmelztemperaturen im Bereich 350°C bis 800°C. Hierbei handelt es sich beispielsweise um Aluminium, Magnesium oder Titan; Leichtmetall-Legierungen sind beispielsweise Aluminiumlegierungen, Magnesiumlegierungen oder Titanlegierungen, wie Ti6246, Ti6242, Ti6Al4V und/oder Ti6Al7Nb. Auch AlSiC kann verwendet werden. AlSiC stellt eine SiC Matrix dar, die mit Al infiltriert bzw. eindiffundiert ist. Durch den Anteil des Al können die Eigenschaften, insbesondere der Ausdehnungskoeffizient, eingestellt werden. Insbesondere hat AlSiC eine niedrigere Wärmeausdehnung als reines Aluminium. Zur Vereinfachung wird AlSiC hier bei den Leichtmetall-Legierungen angeführt.

Unter der zuvor gegebenen Definition eines Leichtmetalls oder einer Leichtmetall-Legierung sind bevorzugt Aluminium oder Aluminiumlegierungen zu verstehen mit einem Schmelzpunkt bzw. einer Schmelztemperatur im Bereich 350°C bis 700°C, einer elektrischen Leitfähigkeit im Bereich 10·10⁶ S/m bis 40·10⁶ S/m, einem Ausdehnungskoeffizient im Bereich 18 x 10⁻⁶/K bis 26 x 10⁻⁶/K sowie einem spezifischen Gewicht im Bereich 2,5 kg/dm³ bis 2,9 kg/dm³.

Der wenigstens eine Leiter, insbesondere im Wesentlichen stiftförmige Leiter, ist erfindungsgemäß bevorzugt ebenfalls ein Leichtmetall oder eine Leichtmetall-Legierung. Die für den Leiter eingesetzten Leichtmetalle oder Leichtmetall-Legierungen zeichnen sich durch eine elektrische Leitfähigkeit im Bereich von 5 · 10⁶ Sm⁻¹ bis 50 · 10⁶ Sm⁻¹ aus.

Alternativ hierzu kann der Leiter, im Wesentlichen stiftförmige Leiter, Kupfer oder CuSiC oder eine Kupferlegierung, Gold oder Goldlegierungen, Silber oder Silberlegierungen, NiFe, ein NiFe-Mantel mit Kupferinnenteil sowie eine Kobalt-Eisen-Legierung umfassen oder hieraus bestehen.

Als Aluminium bzw. Aluminiumlegierung für den Leiter finden bevorzugt Verwendung:
EN AW-1050 A
EN AW-1350
EN AW-2014
EN AW-3003
EN AW-3005
EN AW-4032
EN AW-5019
EN AW-5056
EN AW-5083
EN AW-5556A
EN AW-6060
EN AW-6061
EN AW-6082
EN AW-7020.

Als Kupfer bzw. Kupferlegierungen für den Leiter finden bevorzugt Verwendung:
Cu-PHC 2.0070
Cu-OF 2.0070
Cu-ETP 2.0065
Cu-HCP 2.0070
Cu-DHP 2.0090.

Besonders bevorzugt werden für den Grundkörper und den elektrischen Leiter Aluminium oder eine Aluminiumlegierung eingesetzt.

Das Material des Leiters, insbesondere des stiftförmigen Leiters, kann identisch zum Material des Grundkörpers sein, insbesondere ein Leichtmetall, wie Aluminium, oder eine Leichtmetall-Legierung, wie eine Aluminiumlegierung. Dies hat den Vorteil, dass der Ausdehnungskoeffizient von Grundkörper und Metallstift identisch ist. Der lineare thermische Ausdehnungskoeffizient α des verwendeten Dichtungsglases muss dann nur an ein Material angepasst werden. In diesem Fall ist α_{Dichtungsglas} ungefähr gleich α_{Grundkörper} und/oder α_{Metallstift} und es handelt sich um eine sog. angepasste Durchführung. Bei angepassten Durchführungen treten aufgrund des im Wesentlichen gleichen Ausdehnungskoeffizienten der Materialien bei Temperaturänderungen keine Spannungen zwischen dem Isolator, insbesondere dem Dichtungsglas, und dem Grundkörper bzw. Metallstift auf. Ein derartiges Verhalten kann vorteilhaft sein. In jedem Fall resultiert erfindungsgemäß ein stoffschlüssiger Verbund zwischen dem Dichtungsglas und dem Grundkörper und/oder dem Metallstift.

Wenn eine Druckglasdurchführung zur Verfügung gestellt werden soll, ist α_{Dichtungsglas} unterschiedlich zu, im allgemeinen kleiner als, α_{Grundkörper} und in etwa genau so gross wie α_{Metallstift}. Im Fall, dass der Grundkörper und der Metallstift unterschiedliche Materialien aufweisen, gilt beispielsweise α_{Grundkörper} ≥ α_{Dichtungsglas} ≈ α_{Metallstift}. Die unterschiedlichen Ausdehnungskoeffizienten der Materialien ermöglichen dann eine Druckeinglasung, bei der wieder eine stoffschlüssige Verbindung zwischen Dichtungsglas und den umgebenden Materialien, bevorzugt Leichtmetall, zur Verfügung gestellt wird.

Unter einem "stoffschlüssigen" Verbund wird im Rahmen der vorliegenden Erfindung eine Verbindung verstanden, bei der das Dichtungsglas und der Fügepartner, hier der Grundkörper oder der Metallstift oder beide, durch eine Verbindung auf Basis von atomaren oder molekularen Kräften zusammengehalten werden. Dies stellt einen nicht wieder lösbaren Verbund dar, der sich nur durch Zerstörung der Verbindungsmittel trennen lässt.

Erfindungsgemäß werden daher Dichtungsgläser bereitgestellt, die besonders dafür geeignet sind, mit entsprechenden Materialien, ausgewählt aus Metallen, bevorzugt Leichtmetallen, wie Aluminium, insbesondere Reinaluminium, Magnesium oder Titan oder Leichtmetall-Legierungen, wie Aluminiumlegierungen, Magnesiumlegierungen oder Titanlegierungen, einen stoffschlüssigen Verbund einzugehen. In diesem Zusammenhang zu beachten ist, dass selbstverständlich nicht jede beliebige Glaszusammensetzung geeignet ist, um die erfindungsgemäßen Anforderungen, beispielsweise für den Einsatz in einer Lithium-Ionen-Batterie, zu erfüllen.

Um bei den erfindungsgemäß verwendeten Dichtungsgläsern eine möglichst niedrige Schmelztemperatur zu erreichen, die mit den Schmelztemperaturen und/oder der Verformung des Leichtmetalls kompatibel ist, könnte beispielsweise ein hoher Bleioxidanteil eingesetzt werden. Aufgrund der Toxizität versucht man heutzutage jedoch bleifreie Systeme zu verwenden, so dass die niedrige Schmelztemperatur durch Zugabe von anderen Zusätzen erreicht werden muss. Beispielsweise kann eine gewünscht niedrige Schmelztemperatur durch Zusatz von Li₂O und/oder BaO und/oder V₂O₅ und/oder Bi₂O₃ erhalten werden. Besonders bevorzugt sind Titanatgläser mit einem V₂O₅-Anteil im Bereich > 5 bis 13 Gew.-% und/oder einem Bi₂O₃-Anteil zwischen 0 und 18 Gew.-%, insbesondere 0 - 19 Gew.-%, bevorzugt 0 bis < 10 Gew.-%.

Allgemein gilt es als schwieriger eine stoffschlüssige Verbindung von Dichtungsglas und höher legierten Aluminiumlegierungen herzustellen als mit Reinaluminium (mindestens 99% Aluminium) oder niedrig legiertem Aluminium.

Magnesium ist ein häufig verwendetes Legierungselement bei Aluminium, da es sehr positiven Einfluss auf die Festigkeit der Legierung hat. Bereits Magnesiumgehalte von > 0,5 Gew.-% erweisen sich jedoch als ungünstig was die Haftung des Dichtungsglases betrifft. Häufig wirken auch andere Legierungselemente hinderlich bezüglich der Haftung des Dichtungsglases auf der Oberfläche.

Bekanntermaßen ändern sich bereits bei Aluminium mit geringen Zusätzen der Legierungselemente, wie Magnesium, Silizium, Kupfer, Zink, Nickel, Eisen, Chrom Mangan und dergleichen, u.a. die mechanischen Eigenschaften verglichen mit reinem Aluminium sehr stark.

Um eine Druckeinglasung realisieren zu können, ist es daher vorteilhaft, Aluminiumlegierungen einzusetzen, die nach dem Einglasungsprozess, der üblicherweise bei Temperaturen von 480 °C bis 600 °C durchgeführt wird, noch eine angemessen hohe Festigkeit aufweisen.

Besonders bevorzugt werden daher folgende Aluminiumlegierungen eingesetzt:
EN AW-1050 A
EN AW-1350
EN AW-3003
EN AW-3004
EN AW-3005
EN AW-4032
EN AW-5083
EN AW-6060
EN AW-6061
EN AW-6082
EN AW-7020.

Beim Herstellen einer stoffschlüssigen Verbindung von Dichtungsglas und diesen Aluminiumlegierungen entsteht bei der vorliegenden Erfindung ein besonders guter Haftverbund. Dieser Herstellungsprozess ist ebenfalls einfach und sicher durchzuführen.

Es werden verschiedene Haftungsmechanismen zwischen Dichtungsglas und Aluminiumlegierungen angenommen, welche die stoffschlüssige Verbindung bewirken. Es gibt in der Literatur aber offenbar keinen allgemein akzeptierten Mechanismus. Man geht unter anderem davon aus, dass der mechanische Spannungsunterschied aufgrund unterschiedlicher thermischer Ausdehnung von Dichtungsglas und Aluminium durch plastisches Fließen von Aluminium während des Abkühlens kompensiert wird und ein Abplatzen des Dichtungsglases verhindert.

Zur Verbesserung des Verbunds von Dichtungsglas mit dem Leichtmetall und/oder der Leichtmetall-Legierung, vorzugsweise Aluminium und/oder Aluminiumlegierungen, können ein oder mehrere Vorbehandlungsverfahren und/oder Beschichtungen (Konversionsschichten) durchgeführt werden. Erfindungsgemäß bevorzugt wird eine Oberflächenbehandlung des Leichtmetalls oder der Leichtmetall-Legierung, insbesondere Aluminium und/oder der Aluminiumlegierung, durchgeführt, insbesondere bevorzugt ein Chromatieren, das die Ausbildung von magnesiumreichen Oberflächenschichten verhindert. Ebenfalls können Konversionsschichten auf Basis Titanoxid, Silikat, Zirkonoxid oder Phosphat die Haftung zwischen Aluminium und Dichtungsglas deutlich verbessern.

Erfindungsgemäß wird insbesondere bei Verwendung von Leichtmetall oder Leichtmetall-Legierung, wie Aluminium oder Aluminiumlegierungen, insbesondere nach der gegebenenfalls erfolgten Vorbehandlung der Oberfläche, ein stoffschlüssiger Verbund zwischen dem verwendeten Dichtungsglas und dem Leichtmetall, wie Aluminium und/oder der Leichtmetall-Legierung, wie Aluminiumlegierung, erhalten. Dieser stoffschlüssige Verbund unterstützt neben der mechanischen Belastbarkeit, z.B. gegenüber einem Herausdrücken aus der Öffnung im Grundkörper, die hermetische Dichtheit der Durchführung.

Die angegebenen Dichtungsgläser zeichnen sich durch hohe thermische Dehnungen α (CTE) im Bereich 20°C bis 350°C aus, die bis 25 · 10⁻⁶/K liegen und damit in den Bereich der thermischen Ausdehnung von Leichtmetallen und Leichtmetall-Legierungen, wie Aluminium und Aluminiumlegierungen, fallen. Aluminium besitzt bei Zimmertemperatur eine thermische Ausdehnung α von 23 x 10⁻⁶/K.

Die erfindungsgemäßen Dichtungsgläser eignen sich aufgrund der beschriebenen Eigenschaften zur Verbindung mit temperaturempfindlichen Materialen und/oder Bauteilen in Form von elektrischen Durchführungen. Der Erweichungspunkt (Tg) der erfindungsgemäß verwendeten Dichtungsgläser liegt hierbei typischerweise im Bereich von 300 bis 500°C.

Um zu verhindern, dass beim Herstellen des Verbunds das Leichtmetall/die Leichtmetall-Legierung des Grundkörpers und, sofern Leichtmetall/Leichtmetall-Legierung auch für den Metallstift verwendet wird, auch das Leichtmetall/die Leichtmetall-Legierung des Metallstiftes schmilzt oder deformiert wird, liegt die Verarbeitungstemperatur des Dichtungsglases beim Herstellen der stoffschlüssigen Verbindung mit dem Material des Grundkörpers und/oder Leiters unterhalb der Schmelztemperatur des Materials des Grundkörpers bzw. Leiters. Ein Indikator für diese Verarbeitungstemperatur ist die Transformationstemperatur Tg.

Dichtungsgläser wie sie vorliegend eingesetzt werden, werden im Allgemeinen ausgehend von einem Pulver hergestellt, das aufgeschmolzen und zu einem Formkörper verpresst wird und unter Wärmeeinwirkung mit den zu verbindenden Bauteilen den stoffschlüssigen Verbund ergibt.

Des Weiteren stellt die Erfindung ein Verfahren zum Herstellen einer Durchführung mit wenigstens einem im Wesentlichen stiftförmigen Leiter zur Verfügung, wobei das Verfahren die folgenden Schritte umfasst:
- Bereitstellen eines Leiters, insbesondere eines im Wesentlichen stiftförmigen Leiters, und eines Grundkörpers, wobei der Grundkörper ein Leichtmetall und/oder eine Leichtmetall-Legierung, bevorzugt Aluminium, Magnesium, Titan, eine Aluminiumlegierung, eine Magnesiumlegierung, eine Titanlegierung, wie Ti6246, Ti6242, Ti6Al4V und/oder Ti6Al7Nb, oder AlSiC, umfasst oder hieraus besteht;
- Bereitstellen eines Dichtungsglases, das ein Titanatglas aufweist oder hieraus besteht, Mahlen und Granulieren des Dichtungsglases und hieraus Herstellen eines Formkörpers, der eine geeignete Öffnung für den Leiter aufweist;
- optionales Wärmebehandeln des erhaltenen Formkörpers, gegebenenfalls unter Zugabe eines Bindemittels;
- Zusammensetzen der Teile zu einer Durchführung; und
- Wärmebehandeln unter Ausbildung eines stoffschlüssigen Verbunds zwischen Grundkörper und/oder Leiter, im Wesentlichen stiftförmigem Leiter, und Dichtungsglas.

Bei der Herstellung einer elektrischen Durchführung gemäß der vorliegenden Erfindung, beispielsweise für eine Lithium-Ionen-Batterie, wird im Einzelnen wie folgt vorgegangen:

Zunächst wird der Grundkörper und der Leiter, insbesondere im Wesentlichen stiftförmige Leiter im gewünschten Material zur Verfügung gestellt bzw. beschafft. Der Grundkörper umfasst ein Leichtmetall und/oder eine Leichtmetall-Legierung, bevorzugt Aluminium, Magnesium, Titan, eine Aluminiumlegierung, eine Magnesiumlegierung, eine Titanlegierung, wie Ti6246, Ti6242, Ti6Al4V und/oder Ti6Al7Nb, oder AlSiC, oder besteht hieraus. Der Leiter, insbesondere im Wesentlichen stiftförmige Leiter, kann ein Leichtmetall und/oder eine Leichtmetall-Legierung umfassen oder hieraus bestehen, bevorzugt ausgewählt aus Aluminium, Magnesium, Titan, einer Aluminiumlegierung, einer Magnesiumlegierung, einer Titanlegierung oder AlSiC. Alternativ kann der Leiter, insbesondere im Wesentlichen stiftförmige Leiter, Kupfer oder CuSiC oder eine Kupferlegierung, Gold oder Goldlegierungen, Silber oder Silberlegierungen, NiFe, ein NiFe-Mantel mit Kupferinnenteil sowie eine Kobalt-Eisen-Legierung umfassen oder hieraus bestehen.

Der Grundkörper und der Leiter können, wie bereits erläutert, aus demselben Material aufgebaut sein oder aus verschiedenen Materialien ausgewählt werden.

Weiterhin wird im erfindungsgemäßen Verfahren das Dichtungsglas, das ein Titanatglas aufweist oder hieraus besteht, bereitgestellt, insbesondere hergestellt oder erworben. Das bereitgestellte Dichtungsglas wird aufgemahlen und granuliert und dann mechanisch oder hydraulisch (isostatisch oder uniaxial) zu einem Formkörper verpresst. Es kann vorteilhaft sein, den Formkörper einer geeigneten Wärmebehandlung zu unterziehen (sintern), wodurch die "Grünfestigkeit" des Presskörpers erhöht wird. Die Temperaturen liegen etwa im Bereich von 300°C bis 450°C Ebenfalls kann es vorteilhaft sein, das Pulver vor dem Verpressen mit einem organischen Bindemittel zu vermischen, um die Pressbarkeit zu verbessern. Als organische Bindemittel können beispielsweise Alkohole eingesetzt werden.

Der Presskörper kann gemäß einer Ausführungsform eine zylindrische Form aufweisen. In axialer Richtung ist in dieser Ausführungsform im Presskörper für die Kontaktierung bereits eine zylindrische Öffnung enthalten.

Nach entsprechender optionaler Vorbehandlung, insbesondere Oberflächenbehandlung, des Grundkörpers und/oder bevorzugt stiftförmigen Leiters, beispielsweise einer Entfettung und/oder Entfernung der oberflächlich anhaftenden Oxidschicht (chemisch und/oder mechanisch), erfolgt das Zusammensetzen der Bauteile für die elektrische Durchführung. Nachfolgend wird dann eine Wärmebehandlung durchgeführt, wobei der stoffschlüssige Verbund zwischen Dichtungsglas und Metallteilen erfolgt. Bei der Wärmebehandlung wird vorzugsweise eine Temperatur im Bereich von 400°C bis 600°C eingesetzt. Eine Obergrenze von 650°C sollte bei Aluminium- oder Aluminiumlegierungen nicht überschritten werden.

Erfindungsgemäß ist es möglich, die Durchführung vorzufertigen, d.h. das Stiftmaterial in den Grundkörper unter Verwendung des Dichtungsglas-Formkörpers unter Ausbildung eines stoffschlüssigen Verbunds einzubetten und anschließend in ein Gehäuseteil, insbesondere in eine Batteriezelle, einzubauen. Dies kann eine Vereinfachung und Steigerung der Wirtschaftlichkeit des Herstellungsverfahrens bedeuten, wobei ein kostengünstiges Einbringen der Durchführung in die Öffnung des Gehäuseteils erfolgen kann.

Alternativ kann der Leiter auch direkt in die Öffnung des Gehäuseteiles einer Batterie zusammen mit dem Dichtungsglas-Formkörper unter Ausbildung eines stoffschlüssigen Verbunds eingebettet werden.

Bevorzugt ist der Grundkörper als ringförmiger Grundkörper ausgebildet, bevorzugt in kreisrunder Form, aber auch in ovaler Form. Die ovale Form ist insbesondere dann bevorzugt, wenn das Gehäuseteil, insbesondere das Deckelteil der Batteriezelle, in deren Öffnung(en) die Durchführung eingebracht ist, eine schmale längliche Form aufweist und das Dichtungsglasmaterial, mit dem der stiftförmige Leiter durch das Gehäuseteil in der Öffnung hindurchgeführt wird, vollständig zwischen dem Grundkörper und dem stiftförmigen Leiter eingebracht ist. Eine derartige Ausgestaltung erlaubt es, die Durchführung, bestehend aus einem im Wesentlichen stiftförmigen Leiter und einem im Wesentlichen ringförmigen Grundkörper, vorzufertigen.

Die erfindungsgemäße Batteriedurchführung zeichnet sich nicht nur dadurch aus, dass eine hermetische Abdichtung und stoffschlüssige Verbindung mit einem niedrig schmelzenden Grundkörper möglich ist, sondern auch dadurch, dass eine ausreichende Beständigkeit gegenüber einem Batterieelektrolyten und äußeren Umwelteinflüssen gegeben ist.

Insbesondere ist durch die Erfindung eine ausreichende chemische Stabilität gegenüber nicht wässrigen, in der Regel aggressiven Batterie-Elektrolyten, gegeben. Nicht wässrige Batterie-Elektrolyten bestehen typischerweise aus einem Carbonat, insbesondere aus einer Carbonatmischung, wie beispielsweise einer Mischung aus Ethylencarbonat oder Dimethylcarbonat, wobei die aggressiven, nicht wässrigen Batterie-Elektrolyten ein Leitsalz aufweisen, beispielsweise das Leitsalz LiPF₆, z.B. in Form einer 1 molaren Lösung. Erfindungsgemäß weisen die angegebenen Dichtungsgläser neben einem hohen thermischen Ausdehnungskoeffizienten im Bereich von α (20°C - 350°C) bis 25·10⁻⁶/K und der niedrigen Verschmelz- bzw. Halbkugeltemperatur, auch eine ausreichende Beständigkeit gegenüber den zuvor genannten festen Batterie-Elektrolyten auf. Die Verschmelztemperatur kann beispielsweise über die Halbkugeltemperatur wie in R. Görke, K.-J. Leers: Keram. Z. 48 (1996) 300-305 bzw. nach DIN 51730, ISO 540 oder CEN/TS 15404 und 15370-1 beschrieben, deren Offenbarungsgehalt vollumfänglich in vorliegende Anmeldung mit aufgenommen wird, bestimmt werden. Die Messung der Halbkugeltemperatur ist beispielsweise ausführlich in der DE 10 2009 011 182 A1, deren Offenbarungsgehalt vollumfänglich in vorliegende Anmeldung mit aufgenommen wird, erläutert.

Das Dichtungsglas für die Batteriedurchführung weist in einer bevorzugten Ausführungsform Li auf, das in die Dichtungsglasstruktur eingebaut ist. Da in dem Elektrolyten, wie dieser für Li-Ionen-Speichereinrichtungen verwandt wird, ebenfalls Li enthalten ist, wird durch diese Maßnahme die Batterieleistung nicht beeinträchtigt.

Die erfindungsgemäßen Dichtungsgläser in Form von Titanatgläsern zeichnen sich daher insbesondere durch ihre chemische Beständigkeit aus, so dass neben der Einstellung des CTE gleichzeitig auch die Beständigkeit gegenüber dem Batterieelektrolyten und der wässrigen Beständigkeit gegenüber Luftfeuchte erhöht sind.

Zur Bestimmung der chemischen Beständigkeit werden im Wesentlichen zwei Tests herangezogen. In einem ersten Test wird die mögliche Gasentwicklung als Reaktion zwischen Elektrolyt und Dichtungsglas bewertet. Ein zweiter Test untersucht, wieviel Material vom Dichtungsglas durch den Elektrolyt aufgelöst wird (sog. Auslaugung).

Die Beständigkeit der erfindungsgemäßen Zusammensetzung gegenüber den Batterie-Elektrolyten kann dadurch geprüft werden, dass die Zusammensetzung in Form eines Pulvers mit einer Körnung d50 = 10 µm gemahlen wird und für eine vorbestimmte Zeit, beispielsweise eine Woche, in den Elektrolyten ausgelagert wird. Als nicht wässriger Elektrolyt wird beispielsweise eine Carbonatmischung aus Ethylencarbonat und Dimethylcarbonat (Massenverhältnis 1:1) mit einem Zusatz von LiPF₆ als Leitsalz verwandt (1 molare Lösung). Nachdem das Pulver dem Elektrolyten ausgesetzt war, kann das Pulver abfiltriert und der Elektrolyt auf Bestandteile, die aus dem Dichtungsglas ausgelaugt wurden, untersucht werden (sog. Auslaugung).

Bei Untersuchung der erfindungsgemäß eingesetzten Dichtungsgläser hat sich gezeigt, dass bei diesen keine Gasentwicklung beobachtet wird. Weiterhin hat sich herausgestellt, dass bei den Dichtungsgläsern in den erfindungsgemäßen Zusammensetzungsbereichen nur eine sehr geringe Auslaugung erhalten wird. Es werden Massenverluste erreicht, die weniger als 11 Gew. % vom Einschmelzglas betragen, in besonderen Fällen wird auch eine Auslaugung von nur 1,5 Gew. % vom Einschmelzglas erreicht.

Es hat sich zudem herausgestellt, dass die Beständigkeit der erfindungsgemäßen Dichtungsgläser gegenüber Li- und F-haltigen Elektrolyten höher ist als bei Phosphatgläsern. Weiterhin wurde festgestellt, dass auch die Beständigkeit der erfindungsgemäßen Dichtungsgläser im wässerigen Elektrolyten ausreichend hoch ist.

Ein weiterer Vorteil der erfindungsgemäßen Dichtungsgläser, die in einer Batteriedurchführung mit einem oder mehreren Stiften, insbesondere mit Grundkörpern aus Leichtmetall und/oder Leichtmetall-Legierung, bevorzugt Aluminium oder einer Aluminiumlegierung, Verwendung finden, ist darin zu sehen, dass ein Verschmelzen des Dichtungsglases mit dem Leichtmetall/der Leichtmetall-Legierung des Grundkörpers und/oder dem Metall des Leiters, insbesondere in Form eines Metallstiftes, auch unter einer Gasatmosphäre möglich ist. Ein Vakuum ist somit nicht notwendig. Vielmehr kann eine derartige Verschmelzung auch unter Luft erfolgen. Optional kann Schutzgas benutzt werden. Als Vorbehandlung zum Verschmelzen kann das Metall gereinigt und/oder geätzt (gebeizt), wenn nötig gezielt oxidiert oder beschichtet werden.

Die angegebenen Dichtungsglaszusammensetzungen zeigen gleichzeitig eine hohe chemische Stabilität gegenüber dem bevorzugt nicht wässrigen Elektrolyten sowie einen hohen thermischen Ausdehnungskoeffizienten. Dies ist insbesondere deswegen überraschend, da angenommen wird, dass, je höher der thermische Ausdehnungskoeffizient ist, das zugrundeliegende Material in der Regel umso instabiler wird. Es ist daher überraschend, dass trotz des hohen Ausdehnungskoeffizienten und der niedrigen Verarbeitungstemperatur die angegebenen Dichtungsgläser eine ausreichende chemische Stabilität aufweisen.

Mit der Erfindung wird daher eine Durchführung, bevorzugt eine Batteriedurchführung zur Verfügung gestellt, die sich gegenüber den Durchführungen im Stand der Technik, beispielsweise denjenigen mit Kunststoff als Dichtmaterial, durch eine hohe Temperaturbeständigkeit, insbesondere Temperaturwechselbeständigkeit auszeichnet. Des Weiteren wird eine hermetische Dichtheit auch bei Temperaturänderung beziehungsweise beim Wechseln der Temperatur zur Verfügung gestellt, die verhindert, dass Flüssigkeit, insbesondere Batterieflüssigkeit, austreten kann und/oder Feuchtigkeit in das Gehäuse eindringt. Weiterhin bleibt die Dichtigkeit und Langlebigkeit der Verbindung bestehen, auch aufgrund der hohen Beständigkeit gegenüber Feuchtigkeit. Aufgrund dessen ist die erfindungsgemäße Durchführung auch störfallsicher, z.B. wenn sich in den entsprechenden Anwendungen die Batterie durch Beschädigung oder Fehlfunktion übermäßig erhitzt.

Unter hermetischer Abdichtung wird im Rahmen der Erfindung verstanden, dass bei einem Druckunterschied von 1 bar die Helium-Leckrate <1·10⁻⁸ mbar L s⁻¹, bevorzugt <1·10⁻⁹ mbar L s⁻¹ beträgt.

Das elektrisch isolierende Material, durch das der Leiter, bevorzugt im Wesentlichen stiftförmige Leiter, hindurchgeführt wird, besteht oder umfasst das erfindungsgemäße Dichtungsglas. Wenn dieses Material aus Dichtungsglas besteht, dann ist kein anderes Material vorhanden, es liegt dann nur eine Schicht aus dem erfindungsgemäßen Titanatglas vor. Wenn das elektrisch isolierende Material Dichtungsglas umfasst, so liegt neben der Dichtungsglaszusammensetzung zumindest ein anderes Material, bevorzugt ausgewählt aus einer Glas- oder Glaskeramikzusammensetzung vor. Ganz besonders bevorzugt besteht das elektrisch isolierende Material vollständig aus Glasmaterial, das neben dem erfindungsgemäßen Dichtungsglas weiteres Glasmaterial oder weitere Glasmaterialien enthalten kann.

Nach einer Ausführungsform der Erfindung kann das elektrisch isolierende Material, durch das der Leiter geführt wird, einen Schichtaufbau aus mehreren Schichten, beispielsweise 2 Schichten oder 3 Schichten oder mehr aufweisen oder hieraus bestehen, wobei bevorzugt zumindest die oberste Schicht oder Deckschicht, die zur Außenseite der Speichereinrichtung, wie einer Batterie, angeordnet ist, das erfindungsgemäße Dichtungsglas in Form eines Titanatglases aufweist oder hieraus besteht.

Es kann auch ein Schichtaufbau aus zumindest 3 Schichten vorliegen, bei dem die oberste und/oder unterste Schicht das erfindungsgemäß verwendete Dichtungsglas aufweist oder hieraus besteht. Besonders bevorzugt kann eine Sandwich-Struktur vorliegen, bei der die oberste und unterste Schicht ein Dichtungsglas, ausgewählt aus dem beschriebenen Zusammensetzungsbereich, umfasst oder hieraus besteht. Das Dichtungsglas in beiden Schichten (oberste und unterste Schicht) kann von gleicher oder verschiedener Zusammensetzung sein. Die anderen Schichten in der schichtartigen Struktur sind nicht weiter beschränkt, sofern diese keine nachteiligen Einflüsse haben. Beispielsweise kann im Schichtaufbau auch eine Schicht aus einem Phosphatglas vorliegen. Das Phosphatglas kann beispielsweise die nachfolgenden Komponenten in Mol-% umfassen oder hieraus bestehen:

| | |
|---|---|
| P₂O₅ | 35-50 Mol-%, insbesondere 39-48 Mol-% |
| Al₂O₃ | 0-14 Mol-%, insbesondere 2-12 Mol-% |
| B₂O₃ | 2-10 Mol-%, insbesondere 4-8 Mol-% |
| Na₂O | 0-30 Mol-%, insbesondere 0-20 Mol-% |
| M₂O | 0-20 Mol-%, insbesondere 12-20 Mol-%, wobei M=K, Cs, Rb sein kann |
| PbO | 0-10 Mol-%, insbesondere 0-9 Mol-% |
| Li₂O | 0-45 Mol-%, insbesondere 0-40 Mol-%, ganz bevorzugt 17-40 Mol-% |
| BaO | 0-20 Mol-%, insbesondere 0-20 Mol-%, ganz bevorzugt 5-20 Mol-% |
| Bi₂O₃ | 0-10 Mol-%, insbesondere 1-5 Mol-%, ganz bevorzugt 2-5 Mol-%. |

Besonders bevorzugt ist daher ein Schichtaufbau aus 3 Schichten ("Sandwich"), wobei die oberste und/oder unterste Schicht jeweils ein Dichtungsglas aufweist oder hieraus besteht und eine innere Schicht ein Phosphatglas, bevorzugt das oben angegebene Phosphatglas, aufweist oder hieraus besteht. Der stoffschlüssige Verbund des Dichtungsglases wird bei diesem Dreischichtsystem erfindungsgemäß insbesondere zwischen Grundkörper und Leiter, im Wesentlichen stiftförmigem Leiter, hergestellt.

Ungeachtet der Orientierung der Durchführung in der Speichereinrichtung wird im Rahmen der Erfindung unter "oberste Schicht" diejenige Schicht im Schichtaufbau verstanden, die zur äußeren Umgebung in Kontakt steht und die darunterliegenden Schichten hiervor schützt. Die "unterste Schicht" im Schichtaufbau ist somit die von der obersten Schicht am weitesten entfernt liegende Schicht, die die darüberliegenden Schichten vor den Materialien im Inneren der Speichereinrichtung schützt.

Wenn ein Schichtaufbau, umfassend neben dem Titanatglas zusätzliches Glas-oder Glaskeramikmaterial, vorliegt, ist der Ausdehnungskoeffizient des Glas- oder Glaskeramikmaterials vorzugsweise weitgehend auf den Ausdehnungskoeffizienten des Dichtungsglases abgestimmt.

Besonders bevorzugt weist die Dichtungsglasschicht eine Dicke von 1 bis 10 mm, bevorzugt 4 bis 9 mm, insbesondere 5 bis 7 mm auf und einen bevorzugten Durchmesser von bis zu 20 mm. In einem Schichtaufbau kommen dann zusätzliche Schichten mit variablen Dicken von weiteren Materialien, wie Glas-oder Glaskeramik, hinzu.

In einer weiteren Ausführungsform der Erfindung als Alternative zu dem oben geschilderten Schichtaufbau, für den Fall, dass der Grundkörper und der Metallstift unterschiedliche Materialien aufweisen, ist auch eine Struktur möglich, wobei ein erstes Glas- oder Glaskeramikmaterial mit einem ersten Ausdehungskoeffizienten α₁ und ein zweites Glas- oder Glaskeramikmaterial mit einem zweiten Ausdehnungskoeffizienten α₂ vorliegen, wobei der Ausdehnungskoeffizient α₁ des ersten Glas- oder Glaskeramikmaterials an den Ausdehnungskoeffizienten des Materials des Grundkörpers angepasst ist und der Ausdehungskoeffizient α₂ an den Ausdehnungskoeffizienten des Materials des Leiters, im Wesentlichen stiftförmigen Leiters, angepasst ist. Die Glasteile, bestehend aus mehreren unterschiedlichen Gläsern, können beispielsweise als Glasformteile, bestehend aus mehreren Glasmaterialien, hergestellt werden. Dies wird erfindungsgemäß auch als Multikomponentenglas bezeichnet. Erfindungsgemäß ist hierbei wieder eine unterste (bevorzugt unmittelbar unterhalb des Multikomponentenglases angeordnet) und/oder oberste Schicht bzw. Deckschicht (bevorzugt oberhalb bzw. unmittelbar auf dem Multikomponentenglas angeordnet) vorgesehen, die Dichtungsglas aufweist(en) oder hieraus besteht(en). Besonders bevorzugt weisen die unterste und/oder die oberste Schicht, zwischen denen das Multikomponentenglas angeordnet ist, das erfindungsgemäße Dichtungsglas auf oder bestehen hieraus.

Besonders bevorzugt ist es, wenn das erste Metall ein Leichtmetall, beispielsweise Aluminium ist, und das erste Glasmaterial derart gewählt ist, dass der Ausdehnungskoeffizient α₁ an den Ausdehnungskoeffizienten des Leichtmetalls, wie Aluminium (ungefähr α = 23 x 10⁻⁶ K⁻¹ bei 20°C), angepasst ist. Bevorzugt liegen die Werte für den Ausdehnungskoeffizienten α₁ daher im Bereich (16 bis 25) x 10⁻⁶ K⁻¹ im Temperaturbereich 20°C bis 300°C.

Glasmaterialien mit einem derartigen Ausdehnungskoeffizienten α₁, die in Frage kommen, sind insbesondere solche ausgewählt aus den Glasfamilien Silikattitanate, Sulphophosphate, Telluride, Borate, Vanadate, Fluoride, Phosphate und Silikate. Diese Glasmaterialien können zur Dehnungsanpassung, d.h. zur Anpassung des Ausdehnungskoeffizienten, noch mit Füllstoffen versehen sein. Auch die Zugabe von Alkalien bzw. Erdalkalien zu den Gläsern zur Einstellung des Ausdehnungskoeffizienten sind möglich.

Wenn, wie zuvor beschrieben, in einer weitergebildeten Ausführungsform der Erfindung der stiftförmige Leiter Kupfer oder eine Kupferlegierung mit einem Ausdehnungskoeffizienten von ungefähr α = 16 x 10⁻⁶ K⁻¹ bei 20°C ist, so ist das zweite Glasmaterial bevorzugt so gewählt, dass der Ausdehnungskoeffizient α₂ im Bereich des Ausdehnungskoeffizienten des Metallstiftes liegt, d.h. im Beispielfall zwischen 12 und 18 x 10⁻⁶ K⁻¹ bei 20°C.

Glas- oder Glaskeramikmaterialien, die einen derartigen Ausdehnungskoeffizienten zur Verfügung stellen, sind beispielsweise die Glasfamilien der Silikattitanate, Sulphophosphate, Telluride, Borate, Vanadate, Fluoride, Phosphate und Silikate. Zur Dehnungsanpassung können auch bei diesen Gläsern Zusätze vorgesehen sein, insbesondere Alkalien bzw. Erdalkalien.

Gemäß einer weiterhin bevorzugten Ausführungsform der Erfindung ist das elektrisch isolierende Material, durch das der wenigstens eine Leiter, insbesondere im Wesentlichen stiftförmige Leiter, hindurchgeführt wird, das wenigstens ein erstes Glas- oder Glaskeramikmaterial und ein zweites Glas- oder Glaskeramikmaterial und eine oberste und/oder eine unterste Schicht, umfassend oder bestehend aus Dichtungsglas, aufweist, ein Multikomponentenglas, insbesondere ein Glaspressling.

Gegenstand der Erfindung ist auch eine elektrische Speichereinrichtung, insbesondere Batterie, bevorzugt Lithium-Ionen-Batterie oder Lithium-Ionen-Akkumulator oder Kondensator mit einer Durchführung gemäß der vorliegenden Erfindung.

Das Gehäuse der Batterie besteht bevorzugt aus dem gleichen Material wie der Grundkörper, insbesondere einem Leichtmetall und/oder einer Leichtmetall-Legierung. Der Grundkörper ist bei Batteriezellen bevorzugt Teil des Batteriegehäuses. Bevorzugt handelt es sich bei der Batterie um eine Lithium-Ionen-Batterie.

In einer Ausführungsform umfasst der stiftförmige Leiter zusätzlich ein Kopfteil beziehungsweise Befestigungsteil. Das Kopfteil kann einen über das Kopfteil hinausragenden Fortsatz aufweisen. Der Fortsatz kann dazu dienen, eine Zentrierung für Elektroden bzw. Elektroden-Verbindungsteile zur Verfügung zu stellen. Bei der Ausführungsform mit Kopfteil können an das Kopfteil, das sich in das Innere des Batteriezellengehäuses erstreckt, Elektroden-Verbindungsteile beziehungsweise die Batterieelektroden angeschlossen werden, wie in der WO 2012/110242 A2 und der WO 2012/110246 beschrieben, deren Offenbarungsgehalt hier durch Bezugnahme in die Offenbarung der vorliegenden Beschreibung aufgenommen wird.

Die Batterie weist bevorzugt einen nicht-wässrigen Elektrolyten, insbesondere auf Carbonatbasis, bevorzugt eine Carbonatmischung, auf. Die Carbonatmischung kann ein Ethylencarbonat in Mischung mit Dimethylcarbonat mit einem Leitsalz, beispielsweise LiPF₆, umfassen.

Die Erfindung bezieht sich auch auf Kondensatoren, in denen die erfindungsgemäße Durchführung Verwendung findet.

Des Weiteren stellt die Erfindung gemäß einem weiteren Aspekt die Verwendung von Dichtungsglas in Form von Titanatglas für die Durchführung eines Leiters in das Gehäuse einer Speichereinrichtung, bevorzugt einer Batterie, insbesondere einer Lithium-Ionen-Batterie, einen Lithium-Ionen-Akkumulator oder einen Kondensator, unter hermetischer Abdichtung und elektrischer Isolation der Durchführung und Ausbildung eines stoffschlüssigen Verbunds zwischen einem Grundkörper und/oder einem Leiter mit dem Dichtungsglas zur Verfügung.

Das erfindungsgemäß verwendete Dichtungsglas in Form von Titanatglas umfasst oder besteht aus den nachfolgenden Komponenten in Gew.-%:

| | |
|---|---|
| B₂O₃ | 0 - < 3 Gew.-% |
| Li₂O | 0 - 3 Gew.-%, insbesondere 1 - 3 Gew.% |
| Al₂O₃ | 0 - < 2 Gew.-%, insbesondere -< 2 Gew.-% |
| BaO | 0 - < 11 Gew.-% |
| CaO | 0 - 1 Gew.-% |
| CuO | 0 - < 7 Gew.-% |
| Fe₂O₃ | 0 - < 5 Gew.-% |
| K₂O | 10 - 27 Gew.-% |
| MgO | 0 - < 0,5 Gew.-% |
| Na₂O | 12 - 22 Gew.-% |
| Nb₂O₃ | 0 - < 0,5 Gew.-% |
| P₂O₅ | 0 - 3 Gew.-%, insbesondere 1 - 3 Gew.-% |
| PbO | 0 - < 0,5 Gew.-% |
| SO₃ | 0 - < 0,5 Gew.-% |
| Sb₂O₃ | 0 - < 7 Gew.-% |
| SiO₂ | 24 - 44 Gew.-% |
| SnO₂ | 0 - < 4 Gew.-% |
| SrO | 0 - < 2,5 Gew.-%, insbesondere 0 - < 2 Gew.-%, bevorzugt 0 - 0,5 Gew.-% |
| TiO₂ | 5 - 28 Gew.-% |
| V₂O₅ | 0 - 13 Gew.-%, insbesondere 1 - 13 Gew.-%, insbesondere > 5 - 13 Gew.-% |
| ZnO | 0 - < 0,5 Gew.-% |
| ZrO₂ | 0 - 1 Gew.-% |
| Bi₂O₃ | 0 - 19 Gew.-%, insbesondere 0 - 18 Gew.-%, insbesondere 0 - < 10 Gew.-% |

Besonders bevorzugt ist die Verwendung eines Dichtungsglases, umfassend oder bestehend aus den nachfolgenden Komponenten in Gew.-%:

| | |
|---|---|
| B₂O₃ | 0 - < 3 |
| Li₂O | 1 - 3 |
| Al₂O₃ | 0 - < 2 |
| BaO | 0 - 4 |
| CaO | 0 - 1 |
| CuO | 0 - < 6 |
| Fe₂O₃ | 0 - < 0,5 |
| K₂O | 10 - 20 |
| MgO | 0 - < 0,5 |
| Na₂O | 12 - 20 |
| Nb₂O₃ | 0 - < 0,5 |
| P₂O₅ | 1 - 3 |
| PbO | 0 - < 0,5 |
| SO₃ | 0 - < 0,5 |
| Sb₂O₃ | 0 - < 0,5 |
| SiO₂ | 28 - 37 |
| SnO₂ | 0 - < 0,5 |
| SrO | 0 - < 2,5 |
| TiO₂ | 13 - 28 |
| V₂O₅ | >5 - 10 |
| ZnO | 0 - < 0,5 |
| ZrO₂ | 0 - < 0,5 |
| Bi₂O₃ | 0 - 18. |

In einer bevorzugten Ausgestaltung umfasst der meist stiftförmige innere metallische Leiter der Speichereinrichtung ein Leichtmetall und/oder eine Leichtmetall-Legierung, borzugt Aluminium, Magnesium, Titan, eine Aluminiumlegierung, eine Magnesiumlegierung, eine Titanlegierung, oder AlSiC, oder enthält ein anderes Metall, wie Kupfer oder CuSiC oder eine Kupferlegierung, Gold oder Goldlegierungen, Silber oder Silberlegierungen, NiFe, ein NiFe-Mantel mit Kupferinnenteil sowie eine Kobalt-Eisen-Legierung, oder besteht hieraus. Der Grundkörper sowie das Gehäuse ist bevorzugt aus Leichtmetall und/oder Leichtmetall-Legierung ausgebildet, beispielsweise aus Aluminium oder einer Aluminiumlegierung. Ganz besonders bevorzugt sind sämtliche Teile der Speichereinrichtung aus Leichtmetall und/oder einer Leichtmetall-Legierung, insbesondere Aluminium oder einer Aluminiumlegierung aufgebaut.

Das Dichtungsglas ist entweder Teil des elektrisch isolierenden Materials, durch den wenigstens ein Leiter, insbesondere ein im Wesentlichen stiftförmiger Leiter, hindurchgeführt wird, oder stellt das elektrisch isolierende Material dar. In einem bevorzugten Schichtaufbau des elektrisch isolierenden Materials umfasst die oberste und/oder unterste Schicht das Dichtungsglas oder besteht hieraus. Es kann auch ein Aufbau des elektrisch isolierenden Material vorliegen, in dem ein Multikomponentenglas vorgesehen ist, das wenigstens zwei Gläser mit angepassten Ausdehnungskoeffizienten, einerseits für das Material des Grundkörpers und andererseits für das Material des Leiters, aufweist, wobei das Multikomponentenglas zwischen einer obersten und einer untersten Schicht angeordnet ist, die jeweils Dichtungsglas aufweisen oder hieraus bestehen.

Die Erfindung soll nachfolgend anhand der Figur und der Ausführungsbeispiele ohne Beschränkung hierauf beschrieben werden.

Es zeigen:
- Fig. 1: eine schematische Ansicht einer Ausführungsform der Durchführung gemäß der vorliegenden Erfindung;
- Fig. 2: eine schematische Ansicht einer weiteren Ausführungsform der Durchführung gemäß der vorliegenden Erfindung und
- Fig. 3: eine schematische Ansicht noch einer weiteren Ausführungsform der Durchführung gemäß der vorliegenden Erfindung.

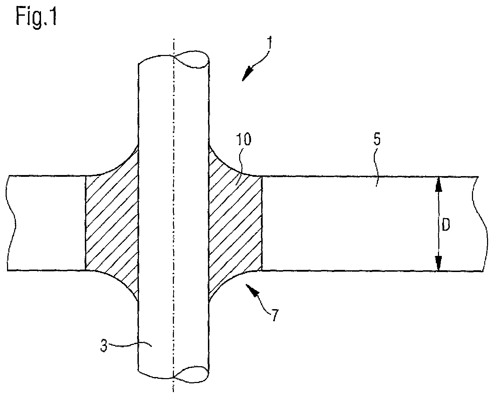

In Fig. 1 ist eine Durchführung 1 gemäß der Erfindung gezeigt. Die Durchführung 1 umfasst als Leiter, insbesondere als stiftförmigen Leiter, einen Metallstift 3, der vorzugsweise aus einem Leichtmetall, beispielsweise Aluminium und/oder einer Leichtmetall-Legierung, beispielsweise einer Aluminiumlegierung, oder einem anderen Metall oder einer anderen Metall-Legierung, wie Kupfer oder einer Kupferlegierung, besteht sowie als Grundkörper 5 ein Metallteil, das erfindungsgemäß vorzugsweise aus einem Leichtmetall, insbesondere Aluminium, Magnesium, Titan und/oder einer Leichtmetall-Legierung, insbesondere einer Aluminiumlegierung, einer Magnesiumlegierung oder einer Titanlegierung, bevorzugt Aluminium oder einer Aluminiumlegierung, besteht. Der Metallstift 3 wird durch eine Öffnung 7, die durch das Metallteil 5 hindurchgeht, hindurchgeführt. Obwohl nur das Hindurchführen eines einzelnen Metallstiftes durch die Öffnung gezeigt ist, könnten auch mehrere Metallstifte durch die Öffnung hindurchgeführt werden, ohne dass von der Erfindung abgewichen wird.

Die Außenkontur der Öffnung 7 kann bevorzugt rund oder aber auch oval ausgebildet sein. Die Öffnung 7 geht durch die ganze Dicke D des Grundkörpers bzw. Metallteils 5 hindurch. Der Metallstift 1 ist von einem erfindungsgemäßen Dichtungsglas 10 umgeben und wird im erfindungsgemäßen Dichtungsglas 10 durch die Öffnung 7 durch den Grundkörper 5 hindurchgeführt. In den Grundkörper 5 wird die Öffnung 7 durch beispielsweise einen Trennvorgang, bevorzugt Stanzen, eingebracht. Um eine hermetische Durchführung des Metallstiftes 3 durch die Öffnung 7 bereitzustellen, wird der Metallstift 3 in einem Dichtungsglaspfropfen 10 (Glaspressling oder Glaslotring) aus dem erfindungsgemäßen Dichtungsglasmaterial eingeschmolzen. Hierdurch entsteht ein stoffschlüssiger Verbund zwischen einerseits Metallstift 3 und Dichtungsglaspfropfen 10 und andererseits zwischen dem Grundkörper 5 und dem Dichtungsglaspropfen 10. Ein wesentlicher Vorteil dieser Herstellungsweise besteht darin, dass auch unter erhöhten Belastungen auf den Dichtungsglaspfropfen 10, z.B. bei einer Druckbelastung, ein Herausdrücken des Pfropfens mit Metallstift 3 aus der Öffnung 7 nicht möglich ist. Die Verarbeitungstemperatur des erfindungsgemäßen Dichtungsglases mit dem Grundkörper 5 liegt vorzugsweise 20 K bis 100 K unterhalb der Schmelztemperatur des Materials des Grundkörpers 5 und/oder des Leiters, insbesondere des stiftförmigen Leiters 3.

In der dargestellten Ausführungsform besteht, ohne Beschränkung hierauf, der Dichtungsglaspfropfen 10 aus einem einzigen Material, einer ausgewählten Dichtungsglaszusammensetzung in Form eines Titanatglases wie angegeben. Besonders bevorzugt besteht in der gezeigten Ausgestaltung das Material des Grundkörpers 5 und des Leiters, insbesondere im Wesentlichen stiftförmigen Leiters 3, aus demselben Material. Ganz besonders bevorzugt wird hierfür Aluminium oder eine Aluminiumlegierung verwendet.

Es wird ein stoffschlüssiger Verbund zwischen dem erfindungsgemäßen Dichtungsglas 10 und den Teilen 3, 5 aus Aluminium oder Aluminiumlegierung erhalten.

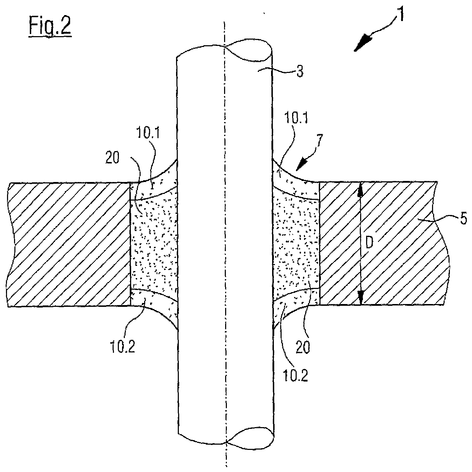

In Fig. 2 ist nochmals ein Pfropfen 10 detailliert dargestellt. Der Pfropfen 10 weist gemäß dieser Ausführungsform einen Schichtaufbau auf, wobei ein Aufbau aus 3 Schichten dargestellt ist. Andere Ausgestaltungen mit weniger oder mehr Schichten sind möglich.

Im gezeigten Schichtaufbau sind die äußeren Schichten 10.1 und 10.2 aus dem erfindungsgemäß verwendeten Dichtungsglas in Form eines Titanatglases aufgebaut. Die beiden Schichten 10.1 und 10.2 können beispielsweise aus gleichen oder unterschiedlichen Dichtungsglas-Zusammensetzungen bestehen. Damit schützen die äußeren Schichten die dazwischen liegende(n) Schicht(en).

Die innere Schicht 20 kann aus einem geeigneten Material ausgewählt werden. Besonders bevorzugt handelt es sich um ein Glas- oder Glaskeramikmaterial. Gemäß einer bevorzugten Ausgestaltung wird die mittlere Schicht 20 von einem Phosphatglas gebildet. Ein besonders bevorzugtes Phosphatglas wurde bereits beschrieben.

Es wird daher ein Pressling hergestellt, der insgesamt drei Schichten umfasst, wobei die äußeren Schichten (oberste und unterste Schicht) 10.1 und 10.2 aus dem erfindungsgemäßen Dichtungsglas ausgewählt sind. Die Ausdehnungskoeffizienten der einzelnen Schichten werden entsprechend ausgewählt.

Die Dichtungsglasschicht 10.1 oder 10.2 weist jeweils eine Dicke im Bereich von 1 bis 10 mm, bevorzugt 4 bis 9 mm, insbesondere 5 bis 7 mm auf und einen bevorzugten Durchmesser von bis zu 25 mm.

Der gezeigte Schichtaufbau in Fig. 2 stellt eine Sandwich-Struktur dar, bei der die äußeren Schichten 10.1 und 10.2 aus erfindungsgemäßem Dichtungsglas die innere Struktur aus Phosphatglas umgeben. Die erste äußere (oberste) Schicht 10.1 (in der Figur oben im Schichtaufbau angeordnet) dient als Abdeckung und Schutz der elektrischen Energieerzeugungs- und/oder Energiespeichereinrichtung, insbesondere Batterie, zur Außenseite, insbesondere zur Umgebung, beispielsweise gegen Feuchtigkeitseintritt. Die zweite äußere (unterste) Schicht 10.2 (in der Figur unten im Schichtaufbau angeordnet) dient als Abdeckung und Schutz der elektrischen Energieerzeugungs- und/oder Energiespeichereinrichtung, insbesondere Batterie, zur Innenseite, insbesondere gegen den in der Batterie enthaltenen Elektrolyten. Andere Varianten sind denkbar. Bei dieser Ausführungsform liegt ein stoffschlüssiger Verbund von Dichtungsglas und Grundkörper und Metallstift vor.

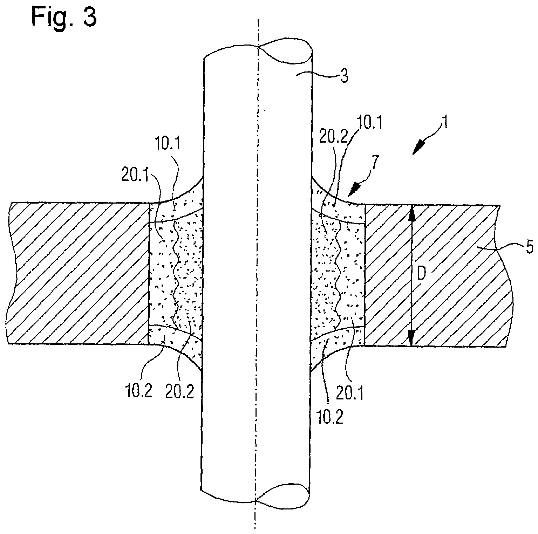

In Fig. 3 ist eine weitere Ausführungsform für eine Durchführung 1 gemäß der Erfindung gezeigt. Die Durchführung 1 umfasst in der gezeigten Ausführungsform als stiftförmigen Leiter einen Metallstift 3, der beispielsweise aus Kupfer besteht. Der Grundkörper 5 besteht im gezeigten Beispiel aus einem Leichtmetall, insbesondere Aluminium, Magnesium und/oder Titan, und/oder einer Leichtmetall-Legierung, insbesondere einer Aluminiumlegierung, Titanlegierung und/oder einer Magnesiumlegierung. Der Ausdehnungskoeffizient α (20°C - 300°C) des Leichtmetalls liegt im Bereich von 18 x 10⁻⁶ bis 30 x 10⁻⁶ /K.

Der Metallstift 3 wird durch eine Öffnung 7, die durch das Metallteil 5 hindurchgeht, hindurchgeführt, es könnten auch mehrere Metallstifte durch die Öffnung hindurchgeführt werden, ohne dass von der Erfindung abgewichen wird.

Die Außenkontur der Öffnung 7 kann bevorzugt rund oder aber auch oval ausgebildet sein. Die Öffnung 7 geht durch die ganze Dicke D des Grundkörpers bzw. Metallteils 5 hindurch. Der Metallstift 1 ist in elektrisch isolierendem Material, bestehend aus Glas- oder Glaskeramikmaterial eingeglast und wird im Glas- oder Glaskeramikmaterial durch die Öffnung 7 durch den Grundkörper 5 hindurchgeführt, die beispielsweise durch Stanzen erzeugt wurde. Um eine hermetische Durchführung des Metallstiftes 3 durch die Öffnung 7 bereitzustellen, wird der Metallstift 3 in einem Glaspfropfen (Glaspressling oder Glaslotring) aus Glas- oder Glaskeramikmaterial eingeschmolzen.

In der dargestellten Ausführungsform besteht, ohne Beschränkung hierauf, der Glaspfropfen nicht aus einem einzigen Material, sondern aus mehreren Materialien; es handelt sich daher um ein Multikomponentenglas.

Da der Ausdehnungskoeffizient α_{Cu} des Metallstiftes 3, der in der gezeigten Ausführungsform aus Kupfer besteht, im Bereich 16 x 10⁻⁶ K⁻¹ bei 20°C liegt und der Ausdehnungskoeffizient α_{Al} des Grundkörpers bzw. Metallteiles, das vorliegend aus Aluminium hergestellt ist, im Bereich 23 x 10⁻⁶ K⁻¹ liegt, weist der Glaspfropfen, an der zum Grundkörper bzw. zum Metallteil 5 gerichteten Seite des Glaspropfens ein erstes Glasmaterial 20.1 auf, dessen Ausdehnungskoeffizient α₁ im Bereich des Ausdehnungskoeffizienten des Metallteils 5 liegt. Im Fall, dass das Metallteil 5 aus Aluminium gefertigt ist, liegt der Ausdehnungskoeffizient α₁ daher im Bereich 16 bis 25 x 10⁻⁶ K⁻¹.

Das zum Metallstift 3 hin gerichtete zweite Glasmaterial 20.2 des Multikomponentenglases weist im Wesentlichen den Ausdehnungskoeffizienten α₂ des Metallstifts 3 auf. Ist der Metallstift 3 ein Kupferstift, so beträgt der Ausdehnungskoeffizient α₂ des zweiten Glasmaterials 20.2 zwischen 12 und 18 x 10⁻⁶ K⁻¹.

In der gezeigten Ausführungsform sind die Schichten 10.1 und 10.2 aus dem erfindungsgemäß verwendeten Dichtungsglas aufgebaut. Die Schicht 10.1 kann in Form eines Deckglases vorliegen. Die beiden Schichten 10.1 und 10.2 können in dieser Ausführungsform aus gleichen oder unterschiedlichen erfindungsgemäßen Dichtungsglas-Zusammensetzungen bestehen. Damit schützen diese Schichten aus den erfindungsgemäßen Dichtungsgläsern das dazwischen liegende Multikomponentenglas.

Das erste Glasmaterial für das Glas 20.1 kann bevorzugt ausgewählt sein aus Silikattitanaten, Sulfophosphaten, Telluriden, Boraten, Vanadaten, Fluoriden, Phosphaten und Silikaten, wobei die Gläser zusätzlich Füllstoffe zur Dehnungsanpassung bzw. Alkalien oder Erdalkalien umfassen können. Für das zweite Glas 20.2, das angrenzend an den Metallstift 3 vorliegt, kommen ebenfalls Silikattitanate, Sulphophosphate, Telluride, Borate, Vanadate, Fluoride, Phosphate und Silikate in Betracht, wobei auch hier Füllstoffe zur Dehnungsanpassung vorgesehen sein könnten sowie Alkalien bzw. Erdalkalien. Das Multikomponentenglas besteht in der gezeigten Ausführungsform daher aus 2 Gläsern mit unterschiedlichen Ausdehnungskoeffizienten α₁, α₂, die durch die Schichten 10.1 und 10.2 aus Titanatglas geschützt werden. Andere Ausgestaltungen mit mehr als 2 Gläsern sind möglich.

Die erste äußere Schicht 10.1 (in der Figur oben angeordnet) dient als Abdeckung und Schutz der elektrischen Energieerzeugungs- und/oder Energiespeichereinrichtung, insbesondere Batterie, zur Außenseite, insbesondere zur Umgebung, beispielsweise gegen Feuchtigkeitseintritt. Die zweite äußere Schicht 10.2 (in der Figur unten angeordnet) dient als Abdeckung und Schutz der elektrischen Energieerzeugungs- und/oder Energiespeichereinrichtung, insbesondere Batterie, zur Innenseite, insbesondere gegen den in der Batterie enthaltenen Elektrolyten. Andere Varianten sind denkbar.

Das elektrisch isolierende Material stellt daher insgesamt ein Multikomponentenglas aus den 2 Gläsern mit jeweils angepasstem Ausdehnungskoeffizienten, die von der oberen und unteren Schicht aus erfindungsgemäßem Dichtungsglas umgeben sind, dar.

Bei dieser Ausführungsform liegt ein stoffschlüssiger Verbund von Dichtungsglas und Grundkörper und Metallstift vor.

Nachfolgend werden Ausführungsbeispiele für die erfindungsgemäß verwendeten Dichtungsglaszusammensetzungen angegeben, die Vergleichsbeispielen gegenübergestellt werden.

### Ausführungsbeispiele:

In den nachfolgenden Tabellen 1 und 2 sind beispielhafte erfindungsgemäße Dichtungsglaszusammensetzungen angegeben:

**Tabelle 1:**

| Zusammenset zung Gew.% | D1 | D2 | D3 | D4 | D5 | D6 | D7 | D8 | D9 | D10 |
|---|---|---|---|---|---|---|---|---|---|---|
| P₂O₅ | 1,7 | 1,7 | 1,7 | 1,2 | 1,0 | 1,0 | 1,0 | 1,0 | 1,0 | 1,0 |
| CaO | | | | 0,1 | 0,1 | 0,1 | 0,1 | 0,1 | 0,1 | 0,1 |
| Li₂O | | | | 1,0 | 1,0 | 1,0 | 1,0 | 1,0 | 1,0 | 0,9 |
| Na₂O | 16,2 | 21,2 | 16,2 | 14,2 | 18,3 | 14,1 | 16,6 | 16,6 | 16,6 | 17,2 |
| K₂O | 20,8 | 25,8 | 20,8 | 18,2 | 26,9 | 21,7 | 24,2 | 24,2 | 24,2 | 24,9 |
| Al₂O₃ | | | | 0,3 | 0,3 | 0,3 | 0,3 | 0,3 | 0,3 | 0,3 |
| B₂O₃ | | | | 0,2 | 0,2 | 0,2 | 0,2 | 0,2 | 0,2 | 0,2 |
| SiO₂ | 43,5 | 33,5 | 33,5 | 39,4 | 28,0 | 27,7 | 27,7 | 30,2 | 30,2 | 32,5 |
| TiO₂ | 17,8 | 17,8 | 17,8 | 14,3 | 13,6 | 13,5 | 13,4 | 13,4 | 13,4 | 5,5 |
| Bi₂O₃ | | | 10,0 | | | 9,9 | 5,0 | 2,5 | 5,0 | 6,9 |
| V₂O₅ | | | | 11,1 | 10,6 | 10,5 | 10,5 | 10,5 | 8 | 10,5 |
| Summe Eigenschaften | 100 | 100 | 100 | 100 | 100 | 100 | 100 | 100 | 100 | 100 |
| α (*) | 17,7 | 22,7 | 19,7 | 17,2 | 24,0 | 21,3 | 23,2 | 22,7 | 23,2 | 24,5 |
| Tg (°C) | 495 | 458 | 463 | 516 | 467 | 471 | 374 | 386 | 418 | 356 |

| | | | | | | | | | | |
|---|---|---|---|---|---|---|---|---|---|---|
| * RT-350°C (x10⁻⁶ K⁻¹) | | | | | | | | | | |

**Tabelle 2:**

| | **A1** | **A2** | **A3** | **A4** | **B1** | **B2** | **C1** | **C2** | **C3** | **D2** | **D5** | **D6** | **E1** |
|---|---|---|---|---|---|---|---|---|---|---|---|---|---|
| **Glasbe standteile** | Gew. % | Gew. % | Gew. % | Gew. % | Gew. % | Gew. % | Gew. % | Gew. % | Gew. % | Gew. % | Gew. % | Gew. % | Gew. % |
| B₂O₃ | 2,0 | 1,2 | 0,5 | 1,6 | 1,3 | 0,8 | 2,4 | 0,2 | 0,2 | 0 | 0,2 | 0,2 | 2 |
| Li₂O | 1,7 | 2,4 | 2,2 | 1,5 | 2,7 | 2,3 | 2,4 | 1,3 | 1,0 | | 1,0 | 1,0 | 1 |
| Al₂O₃ | 0,6 | 1,2 | 0,9 | 1,1 | 0,6 | 0,5 | 0,4 | 1,2 | 0,3 | | 0,3 | 0,3 | 2 |
| As₂O₃ | | | | | | | | | | | | | |
| BaO | | | 0,3 | 3,3 | 4,0 | 0,7 | 9,5 | | | | | | |
| Bi₂O₃ | | | | | | | | | | | | 9,9 | 18 |
| CaO | 1,0 | 0,5 | 0,1 | | | | 0,1 | | 0,1 | | 0,1 | 0,1 | |
| Cl | | | | | | | | | | | | | |
| CuO | 5,7 | | | | | | | | | | | | |
| Fe₂O₃ | | | 3,2 | 3,9 | | | 0,1 | | | | | | |
| K₂O | 11,0 | 11,0 | 12,0 | 13,0 | 11,0 | 12,0 | 12,0 | 12,0 | 18 | 25,8 | 26,9 | 21,7 | 12 |
| MgO | | | 0,0 | | | 0,1 | | | | | | | |
| Na₂O | 17,0 | 16,0 | 17,0 | 15,0 | 16,0 | 16,0 | 13 | 16,0 | 14,0 | 21,2 | 18,3 | 14,1 | 20 |
| Nb₂O₃ | | | | | | | | | | | | | |
| P₂O₅ | 2,1 | 2,2 | 1,6 | 1,7 | 2,3 | 1,9 | 1,4 | 1,5 | 1,5 | 1,7 | 1,0 | 1,0 | |
| PbO | | | | | | | | | | | | | |
| SO₃ | | | | | | 0,1 | | | | | | | |
| Sb₂O₃ | | | | | 2,1 | 0,2 | 6,4 | | | | | | |
| SiO₂ | 30,6 | 32,4 | 33,5 | 32,6 | 33,8 | 34,2 | 24,9 | 33,4, | 29,9 | 33,5 | 28,0 | 27,7 | 26 |
| SnO₂ | | | | | 0,1 | 0,1 | 3,1 | | | | | | |
| SrO | | | | | 0,1 | 0,1 | 2,3 | | | | | | |
| TiO₂ | 23,0 | 23,0 | 26,0 | 26,0 | 18,0 | 22,0 | 22 | 25,0 | 24,0 | 17,8 | 13,6 | 13,5 | 12 |
| V₂O₅ | 5,1 | 10,0 | 2,2 | | 7,7 | 8,8 | | 9,2 | 11,0 | | 10,6 | 10,5 | 6 |
| ZnO | 0,1 | 0,1 | | | | | | 0,1 | | | | | |
| ZrO₂ | 0,1 | | 0,5 | 0,3 | 0,3 | 0,2 | | 0,1 | | | | | 1 |
| Summe | 100 | 100 | 100 | 100 | 100 | 100 | 100 | 100 | 100 | 100 | 100 | 100 | 100 |

Die Beständigkeit einiger in Tabelle 2 angegebenen Dichtungsglaszusammensetzungen wurde anhand des Gewichtsverlusts durch die sog. Auslaugung, die im Einzelnen bereits beschrieben wurde, beurteilt. Die Ergebnisse sind in Tabelle 3 zusammengestellt.

**Tabelle 3: Beständigkeitstest in LP30 (60°C/168h)**

| | Dichtungsglas A1 | Dichtungsglas C1 | Dichtungsglas B1 |
|---|---|---|---|
| Auslaugung Gewichtsverlust (Gew. %) | 9,5 | 1,2 | 10,8 |

Die Zusammensetzung von LP30 war wie folgt:

| | |
|---|---|
| LiPF₆: | 11,8 Gew.% |
| EC (Ethylendicarbonat): | 44,1 Gew.% |
| DC (Dimethylcarbonat): | 44,1 Gew.% |

Die Ergebnisse belegen, dass die erfindungsgemäß ausgewählte Dichtungsglaszusammensetzung A1, C1 und B1 dem Stand der Technik überlegen sind, d.h. deutlich beständiger im LP30 Elektrolyt sind als diese.

**Tabelle 4: Transformationstemperaturen und thermische Ausdehnung (gemessen mit einem optischen Dilatometer)**

| | A1 | A2 | A3 | A4 | B1 | B2 | C1 | C2 | C3 | D2 | D5 | D6 | D10 | E1 |
|---|---|---|---|---|---|---|---|---|---|---|---|---|---|---|
| Tg [°C] | 367 | 380 | 398 | 391 | 375 | 391 | 375 | 408 | 359 | 458 | 467 | 470 | 356 | 359 |
| α* | 17,8 | 18,7 | 17,9 | 16,5 | 18,8 | 18,9 | 16,6 | 18 | 21,2 | n.b. | n.b. | n.b. | n.b. | 21,2 |
| α** | 16,2 | 16,9 | 16,3 | 15,9 | 17 | 16,7 | 14,8 | 15,8 | 19,1 | n.b. | n.b. | n.b. | n.b. | |
| α*** | n.b. | n.b. | n.b. | n.b. | n.b. | n.b. | n.b. | n.b. | n.b. | 22,7 | 24,0 | 21,3 | 24,5 | |

| | | | | | | | | | | | | | | |
|---|---|---|---|---|---|---|---|---|---|---|---|---|---|---|
| * α für den T-Bereich: RT-Tg (x10⁻⁶ K⁻¹) ** α für den T-Bereich: RT-300°C (x10⁻⁶ K⁻¹) *** α für den T-Bereich: RT-350°C (x10⁻⁶ K⁻¹) | | | | | | | | | | | | | | |

In Tabelle 4 sind die Transformationstemperatur Tg für die Dichtungsglaszusammensetzungen von Tabelle 2 angegeben. Die Transformationstemperatur Tg ist beispielsweise in "Schott Guide to Glass, second edition, 1996, Chapman&Hall, Seiten 18-21 definiert. Der Ausdehnungskoeffizient α ist in 10⁻⁶K⁻¹ im Temperaturbereich 20°C bis zum jeweiligen Tg und bis 300°C angegeben.

Alle aufgeführten Glaszusammensetzungen weisen eine relativ niedrige Tg und auf und einen relativ hohen Ausdehnungskoeffizient α auf.
Dies belegt die besonders gute Eignung der erfindungsgemäßen Dichtungsgläser in Verbindung mit Leichtmetallen und/oder Leichtmetall-Legierungen. Erfindungsgemäß sind die Dichtungsgläser insbesondere für Aluminium oder Aluminiumlegierungen geeignet, d.h. ein Aluminiumstift als Leiter in einem umgebenden Aluminium-Grundkörper, wobei das Aluminium auch im Fall des Leiters und/oder Grundkörpers durch eine Aluminiumlegierung ersetzt sein kann. Die Dichtungsglaszusammensetzung C3 und D10 zeichnen sich dadurch aus, dass diese eine sehr hohe thermische Dehnung aufweisten, die bis 24,5 x 10⁻⁶ K⁻¹ für Temperaturen zwischen 20°C und 350°C liegen und damit in dem Bereich der thermischen Ausdehnung von Leichtmetallen, wie Aluminium. So besitzt Aluminium bei Zimmertemperatur eine thermische Ausdehnung α = 23 x 10⁻⁶/K. Um zu verhindern, dass beim Einglasen das Leichtmetall/die Leichtmetall-Legierung des Grundkörpers und eventuell auch des Metallstifts schmilzt oder deformiert wird, liegt die Schmelztemperatur des Glasmaterials unterhalb der Schmelztemperatur des Materials des Grundkörpers und/oder Leiters. Gleichzeitig weisen diese Glaszusammensetzung (C3 und D10) den geringsten Tg auf, dies ist für die Verarbeitung vorteilhaft, da für die Verarbeitung niedrigere Temperaturen zum Einsatz kommen können. Die Verschmelztemperatur der angegebenen Dichtungsglaszusammensetzung liegt dann im Bereich 250°C bis 650°C. Das Einglasen des im Wesentlichen stiftförmigen Leiters und des Grundkörper wird vorzugsweise nach Einsetzen der Durchführung in die Öffnung dadurch erreicht, dass ein vorgefertigter Formkörper aus Dichtungsglas- oder einem Multikomponentenmaterial, umfassend Dichtungsglas, zusammen mit dem Leiter, insbesondere dem stiftförmigen Leiter, und dem Grundkörper einer Wärmebehandlung unterzogen wird. Hieraus resultiert eine stoffschlüssige Verbindung zwischen dem Dichtungsglas und dem Grundkörper und/oder dem Leiter.

Mit der vorliegenden Erfindung wird somit erstmals eine Durchführung für ein Gehäuse, insbesondere ein Batteriezellengehäuse, bevorzugt für eine Lithium-Ionen-Batterie, angegeben, die unter Verwendung von Dichtungsglas dafür geeignet ist, in Gehäuseteile von Batteriezellengehäusen, bestehend aus einem Leichtmetall, insbesondere Aluminium, Magnesium und/oder Titan, und/oder einer Leichtmetall-Legierung, wie einer Aluminiumlegierung, einer Magnesiumlegierung, und/oder einer Titanlegierung, eingesetzt zu werden.

Mit der Durchführung gemäß der Erfindung kann ein Batteriegehäuse zur Verfügung gestellt werden, das auch bei einer Verformung des Batteriegehäuses bei mechanischer und/oder thermischer Belastung hermetisch dicht ist, im Gegensatz zu Kunststoffdurchführungen, die zur Rissbildung neigen. Die in den erfindungsgemäßen Durchführungen verwendeten Dichtungsgläser sind chemisch beständig, insbesondere auch im Hinblick auf einen Li- und F-haltigen Elektrolyten. Hierdurch wird bei Batterien mit Batteriegehäusen, die eine erfindungsgemäße Durchführung aufweisen, insbesondere eine hohe Dauertemperaturbeständigkeit im Normalbetriebszustand, aber auch bei Fahrzeugunfällen und/oder Fehlfunktionen zur Verfügung gestellt. Dies ist insbesondere bei einem Einsatz von Batterien, bevorzugt Li-Ionen-Batterien im Automobilbereich oder in Flugzeugen von Bedeutung.

Die erfindungsgemäße Lösung ermöglicht es insbesondere auch aufgrund einer Reduzierung des Phosphatanteils, auf ein kostengünstiges Herstellungsverfahren und Ausgangsmaterialien zurückzugreifen. Ferner kann die gesamte Durchführung als vorgefertigtes Bauteil ausgebildet sein, in welches der Metallstift mittels eines Fixiermaterials, d.h. beispielsweise eines Dichtungsglaspfropfens, in einen Grundkörper eingeschmolzen wird, bevor dieser in das Gehäuseteil eingesetzt wird.

## Patentansprüche

1. Durchführung für eine Speichereinrichtung, insbesondere Batteriedurchführung, bevorzugt für eine Lithium-Ionen-Batterie, einen Lithium-Ionen-Akkumulator oder einen Kondensator, mit wenigstens einem Grundkörper, der wenigstens eine Öffnung aufweist, durch die wenigstens ein Leiter, insbesondere ein im Wesentlichen stiftförmiger Leiter, in einem elektrisch isolierenden Material, welches ein Dichtungsglas umfasst oder hieraus besteht, hindurchgeführt wird, wobei der Grundkörper ein Leichtmetall und/oder eine Leichtmetall-Legierung, bevorzugt ausgewählt aus Aluminium, Magnesium, Titan, einer Aluminiumlegierung, einer Magnesiumlegierung, einer Titanlegierung oder AlSiC, umfasst oder hieraus besteht, unter Ausbildung eines stoffschlüssigen Verbunds des Grundkörpers und/oder des Leiters mit dem Dichtungsglas, wobei das Dichtungsglas ein Titanatglas aufweist oder hieraus besteht,
**dadurch gekennzeichnet, dass**
das Dichtungsglas in Form eines Titanatglases die nachfolgenden Komponenten in Gew.-% auf Oxidbasis umfasst oder hieraus besteht:
| | |
|---|---|
| B₂O₃ | 0 - < 3 |
| Li₂O | 0 - 3 |
| Al₂O₃ | 0 - 2 |
| BaO | 0 - < 11 |
| CaO | 0 - 1 |
| CuO | 0 - < 7 |
| Fe₂O₃ | 0 - < 5 |
| K₂O | 10 - 27 |
| MgO | 0 - < 0,5 |
| Na₂O | 12 - 22 |
| Nb₂O₃ | 0 - < 0,5 |
| P₂O₅ | 0 - 3 |
| PbO | 0 - < 0,5 |
| SO₃ | 0 - < 0,5 |
| Sb₂O₃ | 0 - < 7 |
| SiO₂ | 24 - 44 |
| SnO₂ | 0 - < 4 |
| SrO | 0 - < 2,5 |
| TiO₂ | 5 - 28 |
| V₂O₅ | 0 - 13 |
| ZnO | 0 - < 0,5 |
| ZrO₂ | 0 - 1 |
| Bi₂O₃ | 0 - 19. |

2. Durchführung nach Anspruch 1,
**dadurch gekennzeichnet, dass**
bei dem Dichtungsglas in Form eines Titanatglases für den Gehalt der nachfolgenden Komponenten in Gew.-% auf Oxidbasis gilt, einzeln oder in jeder beliebigen Kombination:
| | |
|---|---|
| Al₂O₃ | 0 - <2 |
| SrO | 0 - < 2 |
| V₂O₅ | > 5 - 13 |
| Bi₂O₃ | 0 - 18 |

3. Durchführung nach Anspruch 1,
**dadurch gekennzeichnet, dass**
das Dichtungsglas in Form eines Titanatglases die nachfolgenden Komponenten in Gew.-% auf Oxidbasis umfasst oder hieraus besteht:
| | |
|---|---|
| B₂O₃ | 0 - < 3 |
| Li₂O | 1 - 3 |
| Al₂O₃ | 0 - < 2 |
| BaO | 0 - 4 |
| CaO | 0 - 1 |
| CuO | 0 - < 6 |
| Fe₂O₃ | 0 - < 0,5 |
| K₂O | 10 - 20 |
| MgO | 0 - < 0,5 |
| Na₂O | 12 - 20 |
| Nb₂O₃ | 0 - < 0,5 |
| P₂O₅ | 1 - 3 |
| PbO | 0 - < 0,5 |
| SO₃ | 0 - < 0,5 |
| Sb₂O₃ | 0 - < 0,5 |
| SiO₂ | 28 - 37 |
| SnO₂ | 0 - < 0,5 |
| SrO | 0 - < 0,5 |
| TiO₂ | 13 - 28 |
| V₂O₅ | >5 - 10 |
| ZnO | 0 - < 0,5 |
| ZrO₂ | 0 - < 0,5 |
| Bi₂O₃ | 0 - 18. |

4. Durchführung nach einem der Ansprüche 1 bis 3,
**dadurch gekennzeichnet, dass**
der Leiter, insbesondere im Wesentlichen stiftförmige Leiter,
ein Leichtmetall und/oder eine Leichtmetall-Legierung, bevorzugt Aluminium oder eine Aluminiumlegierung umfasst oder hieraus besteht
oder
Kupfer, CuSiC, eine Kupferlegierung, Gold, eine Goldlegierung, Silber, eine Silberlegierung, NiFe, einen NiFe-Mantel mit Kupferinnenteil oder eine Kobalt-Eisen-Legierung, bevorzugt Kupfer oder eine Kupferlegierung umfasst oder hieraus besteht.

5. Durchführung nach einem der Ansprüche 1 bis 4,
**dadurch gekennzeichnet, dass**
das Dichtungsglas einen Ausdehnungskoeffizienten α im Bereich 20°C bis 300°C im Bereich von 17 10⁻⁶/K bis 25 10⁻⁶/K aufweist und bevorzugt eine Tranformationstemperatur Tg, die im Bereich von 300 bis 500°C liegt.

6. Durchführung nach einem der vorangehenden Ansprüche,
**dadurch gekennzeichnet, dass**
das Leichtmetall und/oder die Leichtmetall-Legierung vor dem Ausbilden des stoffschlüssigen Verbunds ein oder mehreren Vorbehandlungsverfahren und/oder Beschichtungen, bevorzugt einer Oberflächenbehandlung unterzogen wurde, besonders bevorzugt ausgewählt aus einer Entfettung, Entfernung der oberflächlich anhaftenden Oxidschicht, Chromatierung, Phosphatierung, Silikat-Beschichtung, Titanoxid-Beschichtung oder Zirkonoxidbeschichtung.

7. Durchführung nach mindestens einem der vorangehenden Ansprüche,
**dadurch gekennzeichnet, dass**
das elektrisch isolierende Material, durch das der wenigstens eine Leiter, insbesondere im Wesentlichen stiftförmige Leiter, hindurchgeführt wird, einen Mehrschichtaufbau aufweist, wobei beim Mehrschichtaufbau die oberste und/oder die unterste Schicht, bevorzugt beide Schichten, ein Dichtungsglas wie in Anspruch 1, 2 oder 3 definiert umfassen oder hieraus bestehen.

8. Durchführung nach Anspruch 7,
**dadurch gekennzeichnet, dass**
ein Mehrschichtaufbau mit zumindest 3 Schichten vorliegt, wobei die oberste und/oder unterste Schicht ein Dichtungsglas wie in Anspruch 1, 2 oder 3 definiert umfasst oder hieraus besteht und eine mittlere Schicht ein Phosphatglas aufweist oder hieraus besteht, wobei das Phosphatglas vorzugsweise die nachfolgenden Komponenten in Mol-% umfasst oder hieraus besteht:
| | |
|---|---|
| P₂O₅ | 35-50 Mol-%, insbesondere 39-48 Mol-% |
| Al₂O₃ | 0-14 Mol-%, insbesondere 2-12 Mol-% |
| B₂O₃ | 2-10 Mol-%, insbesondere 4-8 Mol-% |
| Na₂O | 0-30 Mol-%, insbesondere 0-20 Mol-% |
| M₂O | 0-20 Mol-%, insbesondere 12-20 Mol-%, wobei M=K, Cs, Rb sein kann |
| PbO | 0-10 Mol-%, insbesondere 0-9 Mol-% |
| Li₂O | 0-45 Mol-%, insbesondere 0-40 Mol-%, ganz bevorzugt 17-40 Mol-% |
| BaO | 0-20 Mol-%, insbesondere 0-20 Mol-%, ganz bevorzugt 5-20 Mol-% |
| Bi₂O₃ | 0-10 Mol-%, insbesondere 1-5 Mol-%, ganz bevorzugt 2-5 Mol-%. |

9. Durchführung nach einem der Ansprüche 1 bis 6,
**dadurch gekennzeichnet, dass**
das elektrisch isolierende Material, durch das der wenigstens eine Leiter, insbesondere im Wesentlichen stiftförmige Leiter, hindurchgeführt wird, wenigstens zwei Glas- oder Glaskeramikmaterialien, ein erstes Glas- oder Glaskeramikmaterial und ein zweites Glas- oder Glaskeramikmaterial mit unterschiedlichen Ausdehnungskoeffizienten α (20°C - 300°C) umfasst,
wobei das erste Glas- oder Glaskeramikmaterial derart gewählt ist, dass der Ausdehnungskoeffizient α₁ des ersten Glas- oder Glaskeramikmaterials an den Ausdehnungskoeffizienten des Materials des Grundkörpers angepasst ist und
das zweite Glas- oder Glaskeramikmaterial derart gewählt ist, dass der Ausdehnungskoeffizient α₂ (20°C - 300° C) des zweiten Glas- oder Glaskeramikmaterials an den Ausdehnungskoeffizienten des Materials des Leiters angepasst ist,
und eine oberste und/oder eine unterste Schicht vorgesehen sind, die ein Dichtungsglas wie in Anspruch 1, 2 oder 3 definiert umfassen oder hieraus bestehen.

10. Durchführung nach Anspruch 9,
**dadurch gekennzeichnet, dass**
der Ausdehnungskoeffizient α₁ des ersten Glas- oder Glaskeramikmaterials im Bereich von (16 bis 25) x 10⁻⁶ K⁻¹ im Bereich 20°C bis 300°C liegt, wobei das erste Glas- oder Glaskeramikmaterial bevorzugt ein Glasmaterial, ausgewählt aus folgenden Glasmaterialien ist:
Silikattitanaten
Sulphophosphaten
Telluriden
Boraten
Vanadaten
Fluoriden
Phospaten
Silikaten:
alle vorgenannten Materialien optional mit
Füllstoffen zur Dehnungsanpassung
Alkalien und/oder Erdalkalien
Dotierstoffen, die im Bereich des Emissionsmaximums von Infrarotstrahlung liegen, insbesondere Fe, Cr Co, V.

11. Durchführung nach einem der Ansprüche 9 oder 10,
**dadurch gekennzeichnet, dass**
das zweite Glas- oder Glaskeramikmaterial einen Ausdehnungskoeffizienten α₂ im Bereich von (12 bis 18) x 10⁻⁶ K⁻¹ im Bereich 20°C bis 300° C aufweist.

12. Durchführung nach einem der Ansprüche 9 bis, 11 **dadurch gekennzeichnet, dass**
das elektrisch isolierende Material,
durch das der wenigstens eine Leiter, insbesondere im Wesentlichen stiftförmige Leiter, hindurchgeführt wird, wenigstens ein erstes Glas- oder Glaskeramikmaterial und ein zweites Glas- oder Glaskeramikmaterial und einen Mehrschichtaufbau aufweist, wobei beim Mehrschichtaufbau eine oberste und/oder eine unterste Schicht ein Dichtungsglas wie in Anspruch 1, 2 oder 3 definiert umfasst oder hieraus besteht,
ein Multikomponentenglas, insbesondere ein Glaspressling, ist.

13. Speichereinrichtung, insbesondere Batterie, bevorzugt Lithium-Ionen-Batterie, Lithium-Ionen-Akkumulator oder Kondensator, mit einer Durchführung nach einem der Ansprüche 1 bis 12.

14. Verwendung von Titanatglas als Dichtungsglas in einer Durchführung nach einem der Ansprüche 1 bis 12 in einer Speichereinrichtung, insbesondere Batterie, bevorzugt Lithium-Ionen-Batterie, Lithium-Ionen-Akkumulator oder Kondensator.

15. Verwendung nach Anspruch 14,
**dadurch gekennzeichnet, dass**
das Dichtungsglas in Form eines Titanatglases die nachfolgenden Komponenten in Gew.-% auf Oxidbasis umfasst oder hieraus besteht:
| | |
|---|---|
| B₂O₃ | 0 - < 3 |
| Li₂O | 0 - 3 |
| Al₂O₃ | 0 - < 2 |
| BaO | 0 - < 11 |
| CaO | 0 - 1 |
| CuO | 0 - < 7 |
| Fe₂O₃ | 0 - < 5 |
| K₂O | 10 - 27 |
| MgO | 0 - < 0,5 |
| Na₂O | 12 - 22 |
| Nb₂O₃ | 0 - < 0,5 |
| P₂O₅ | 0 - 3 |
| PbO | 0 - < 0,5 |
| SO₃ | 0 - < 0,5 |
| Sb₂O₃ | 0 - < 7 |
| SiO₂ | 24 - 44 |
| SnO₂ | 0 - < 4 |
| SrO | 0 - < 2,5 |
| TiO₂ | 5 - 28 |
| V₂O₅ | 0 - 13 |
| ZnO | 0 - < 0,5 |
| ZrO₂ | 0 - 1 |
| Bi₂O₃ | 0 - 13. |

16. Verfahren zur Herstellung einer Durchführung, insbesondere nach einem der Ansprüche 1 bis 12, umfassend folgende Schritte:
- Bereitstellen eines Leiters, insbesondere eines im Wesentlichen stiftförmigen Leiters, und eines Grundkörpers, wobei der Grundkörper ein Leichtmetall und/oder eine Leichtmetall-Legierung, bevorzugt ausgewählt aus Aluminium, Magnesium, Titan, einer Aluminiumlegierung, einer Magnesiumlegierung, einer Titanlegierung, oder AlSiC, umfasst oder hieraus besteht;
- Bereitstellen des Dichtungsglases, das ein Titanatglas aufweist oder hieraus besteht, Mahlen und Granulieren des Dichtungsglases und hieraus Herstellen eines Formkörpers, der eine geeignete Öffnung für den Leiter aufweist;
- optionales Wärmebehandeln des erhaltenen Formkörpers, gegebenenfalls unter Zugabe eines Bindemittels;
- Zusammensetzen der Teile zu einer Durchführung; und
- Wärmebehandeln unter Ausbildung eines stoffschlüssigen Verbunds zwischen Grundkörper und/oder Leiter, im Wesentlichen stiftförmigem Leiter, und Dichtungsglas

## Claims

1. A feedthrough for a storage device, especially a battery feedthrough, preferably for a lithium-ion battery, a lithium-ion storage cell or a capacitor, comprising at least one base body having at least one opening, through which at least one conductor, especially a substantially pin-shaped conductor, is guided in an electrically insulating material which comprises a sealing glass or consists thereof, wherein the base body comprises or consists of a light metal and/or light metal alloy, preferably selected from aluminium, magnesium, titanium, or an aluminium alloy, a magnesium alloy, a titanium alloy or AlSiC, by forming a material bonding of the base body and/or the conductor with the sealing glass, wherein the sealing glass comprises or consists of a titanate glass, **characterized in that** the sealing glass in form of a titanate glass comprises or consists of the following components in weight-% on an oxide basis:
| | |
|---|---|
| B₂O₃ | 0 - < 3 |
| Li₂O | 0 - 3 |
| Al₂O₃ | 0 - 2 |
| BaO | 0 - < 11 |
| CaO | 0 - 1 |
| CuO | 0 - < 7 |
| Fe₂O₃ | 0 - < 5 |
| K₂O | 10 - 27 |
| MgO | 0 - <0.5 |
| Na₂O | 12 - 22 |
| Nb₂O₃ | 0 - <0.5 |
| P₂O₅ | 0 - 3 |
| PbO | 0 - < 0.5 |
| SO₃ | 0 - < 0.5 |
| Sb₂O₃ | 0 - < 7 |
| SiO₂ | 24 - 44 |
| SnO₂ | 0 - < 4 |
| SrO | 0 - < 2.5 |
| TiO₂ | 5 - 28 |
| V₂O₅ | 0 - 13 |
| ZnO | 0 - < 0.5 |
| ZrO₂ | 0 - 1 |
| Bi₂O₃ | 0 - 19. |

2. A feedthrough according to claim 1, **characterized in that** it applies in the sealing glass in form of a titanate glass for the content of the following components in weight-% on an oxide basis, individually or in any combination:
| | |
|---|---|
| Al₂O₃ | 0 - < 2 |
| SrO | 0 - < 2 |
| V₂O₅ | > 5 - 13 |
| Bi₂O₃ | 0 - 18. |

3. A feedthrough according to claim 1, **characterized in that** the sealing glass in form of a titanate glass comprises or consists of the following components in weight-% on an oxide basis:
| | |
|---|---|
| B₂O₃ | 0 - < 3 |
| Li₂O | 1 - 3 |
| Al₂O₃ | 0 - < 2 |
| BaO | 0 - 4 |
| CaO | 0 - 1 |
| CuO | 0 - < 6 |
| Fe₂O₃ | 0 - < 0.5 |
| K₂O | 10 - 20 |
| MgO | 0 - < 0.5 |
| Na₂O | 12 - 20 |
| Nb₂O₃ | 0 - < 0.5 |
| P₂O₅ | 1 - 3 |
| PbO | 0 - < 0.5 |
| SO₃ | 0 - < 0.5 |
| Sb₂O₃ | 0 - < 0.5 |
| SiO₂ | 28 - 37 |
| SnO₂ | 0 - < 0.5 |
| SrO | 0 - < 0.5 |
| TiO₂ | 13 - 28 |
| V₂O₅ | >5 - 10 |
| ZnO | 0 - < 0.5 |
| ZrO₂ | 0 - < 0.5 |
| Bi₂O₃ | 0 - 18. |

4. A feedthrough according to one of the claims 1 to 3, **characterized in that** the conductor, especially substantially a pin-shaped conductor, comprises or consists of a light metal and/or a light metal alloy, preferably aluminium or an aluminium alloy, or comprises or consists of copper, CuSiC, a copper alloy, gold, a gold alloy, silver, a silver alloy, NiFe, an NiFe casing having an inner copper part, or a cobalt-iron alloy, preferably copper or a copper alloy.

5. A feedthrough according to one of the claims 1 to 4, **characterized in that** the sealing glass has a coefficient of expansion α in the range of 20°C to 300°C in the range of 17 · 10⁻⁶/K to 25 · 10⁻⁶/K and preferably a transformation temperature Tg which lies in the range of 300 to 500°C.

6. A feedthrough according to one of the preceding claims, **characterized in that** the light metal and/or the light metal alloy was subjected prior to the formation of the material bond to one or several pretreatment processes and/or coatings, preferably a surface treatment, especially preferably selected from degreasing, removing the surface-attached oxide layer, chromating treatment, phosphating, coating with silicate, coating with titanium oxide or zirconium oxide.

7. A feedthrough according to one of the preceding claims, **characterized in that** the electrically insulating material, through which the at least one conductor, especially substantially a pin-shaped conductor, is guided through, has a multi-layer structure, wherein the uppermost and/or the lowermost layer, preferably both layers, in the multi-layer structure comprise or consist of a sealing glass as defined in claim 1, 2 or 3.

8. A feedthrough according to claim 7, **characterized in that** the multi-layer structure is present with at least three layers, wherein the uppermost and/or lowermost layer comprises or consists of a sealing glass as defined in claim 1, 2 or 3, and a middle layer comprises or consists of a phosphate glass, wherein the phosphate glass preferably comprises or consists of the following components in mol-%:
| | |
|---|---|
| P₂O₅ | 35-50 mol-%, especially 39-48 mol-% |
| Al₂O₃ | 0-14 mol-%, especially 2-12 mol-% |
| B₂O₃ | 2-10 mol-%, especially 4-8 mol-% |
| Na₂O | 0-30 mol-%, especially 0-20 mol-% |
| M₂O | 0-20 mol-%, especially 12-20 mol-%, wherein it can be that |
| | M=K, Cs, Rb |
| PbO | 0-10 mol-%, especially 0-9 mol-% |
| Li₂O | 0-45 mol-%, especially 0-40 mol-%, more preferably 17-40 mol-% |
| BaO | 0-20 mol-%, especially 0-20 mol-%, more preferably 5-20 mol-% |
| Bi₂O₃ | 0-10 mol-%, especially 1-5 mol-%, more preferably 2-5 mol-%. |

9. A feedthrough according to one of the claims 1 to 6, **characterized in that** the electrically insulating material through which the at least one conductor, especially substantially a pin-shaped conductor, is guided through, comprises at least two glass or glass ceramic materials, a first glass or glass ceramic material and a second glass or glass ceramic material with different coefficients of expansion α (20°C to 300°C),
wherein the first glass or glass ceramic material is selected in such a way that the coefficient of expansion α₁ of the first glass or glass ceramic material is adjusted to the coefficient of expansion of the material of the base body, and
the second glass or glass ceramic material is selected in such a way that the coefficient of expansion α₂ (20°C to 300°C) of the second glass or glass ceramic material is adjusted to the coefficient of expansion of the material of the conductor,
and an uppermost and/or lowermost layer is provided which comprise or consist of a sealing glass as defined in claim 1, 2 or 3.

10. A feedthrough according to claim 9, **characterized in that** the coefficient of expansion α₁ of the first glass or glass ceramic material lies in the range of (16 to 25) x 10⁻⁶K⁻¹ in the range of 20°C to 300°C, wherein the first glass or glass ceramic material is preferably a glass material selected from the following glass materials:
silicate titanates
sulpho-phosphates
tellurides
borates
vanadates
fluorides
phosphates
silicates:
all aforementioned materials optionally with fillers for expansion adaptation alkalis and/or earth alkalis
doping agents which lie in the range of the emission maximum of infrared radiation, especially Fe, Cr, Co, V.

11. A feedthrough according to one of the claims 9 or 10, **characterized in that** the second glass or glass ceramic material has a coefficient of expansion α₂ in the range of (12 to 18) x 10⁻⁶K⁻¹ in the range of 20°C to 300°C.

12. A feedthrough according to one of the claims 9 to 11, **characterized in that** the electrically insulating material through which the at least one conductor, in particular substantially a pin-shaped conductor, is guided, comprises at least one first glass or glass ceramic material and a second glass or glass ceramic material and has a multi-layer structure, wherein in the multi-layer structure an uppermost and/or lowermost layer comprises or consists of a sealing glass as defined in claim 1, 2 or 3, is a multicomponent glass, especially a glass pellet.

13. A storage device, especially a battery, preferably a lithium-ion battery, a lithium-ion storage cell or capacitor, comprising a feedthrough according to one of the claims 1 to 12.

14. The use of titanate glass as a sealing glass in a feedthrough according to one of the claims 1 to 12 in a storage device, especially a battery, preferably a lithium-ion battery, a lithium-ion storage cell or capacitor.

15. The use according to claim 14, **characterized in that** the sealing glass in form of a titanate glass comprises or consists of the following components in weight-% on an oxide basis:
| | |
|---|---|
| B₂O₃ | 0 - < 3 |
| Li₂O | 0 - 3 |
| Al₂O₃ | 0 - < 2 |
| BaO | 0 - < 11 |
| CaO | 0 - 1 |
| CuO | 0 - < 7 |
| Fe₂O₃ | 0 - < 5 |
| K₂O | 10 - 27 |
| MgO | 0 - < 0.5 |
| Na₂O | 12 - 22 |
| Nb₂O₃ | 0 - < 0.5 |
| P₂O₅ | 0 - 3 |
| PbO | 0 - < 0.5 |
| SO₃ | 0 - < 0.5 |
| Sb₂O₃ | 0 - < 7 |
| SiO₂ | 24 - 44 |
| SnO₂ | 0 - < 4 |
| SrO | 0 - < 2.5 |
| TiO₂ | 5 - 28 |
| V₂O₅ | 0 - 13 |
| ZnO | 0 - < 0.5 |
| ZrO₂ | 0 - 1 |
| Bi₂O₃ | 0 - 13. |

16. A method for producing a feedthrough, especially according to one of the claims 1 to 12, comprising the following steps:
- providing a conductor, especially a substantially pin-shaped conductor, and a base body, wherein the base body comprises or consists of a light metal and/or a light metal alloy, preferably selected from aluminium, magnesium, titanium, an aluminium alloy, a magnesium alloy, a titanium alloy, or AlSiC;
- providing the sealing glass which comprises or consists of a titanate glass, grinding and granulating the sealing glass and producing therefrom a shaped body having a suitable opening for the conductor;
- optional heat treatment of the obtained shaped body, optionally by adding a bonding agent;
- assembling the parts to form a feedthrough; and
- heat treatment by forming a material bond between the base body and/or the conductor, substantially pin-shaped conductor, and the sealing glass.

## Revendications

1. Traversée pour un dispositif accumulateur, en particulier traversée de batterie, de préférence pour une batterie lithium-ion, un accumulateur lithium-ion ou un condensateur, avec au moins un corps présentant au moins une ouverture à travers laquelle un conducteur, en particulier un conducteur sensiblement en forme de broche, est passé à travers un matériau isolant électrique entouré ou composé d'un verre d'étanchéité, le corps contenant un métal léger et/ou un alliage de métaux légers, de préférence choisi parmi l'aluminium, le magnésium, le titane, un alliage d'aluminium, un alliage de magnésium, un alliage de titane ou un alliage AlSiC ou en étant composé, en formant un assemblage par solidarité de matière du corps et/ou du conducteur avec le verre d'étanchéité, le verre d'étanchéité contenant un verre de titanate ou en étant composé,
**caractérisée en ce que** le verre d'étanchéité formé par un verre de titanate contient les composants suivants, en pourcentage du poids d'oxyde, ou en est composé :
| | |
|---|---|
| B₂O₃ | 0 à < 3 |
| Li₂O | 0 à 3 |
| Al₂O₃ | 0 à 2 |
| BaO | 0 à < 11 |
| CaO | 0 à 1 |
| CuO | 0 à < 7 |
| Fe₂O₃ | 0 à < 5 |
| K₂O | 10 à 27 |
| MgO | 0 à < 0,5 |
| Na₂O | 12 à 22 |
| Nb₂O₃ | 0 à < 0,5 |
| P₂O₅ | 0 à 3 |
| PbO | 0 à < 0,5 |
| SO₃ | 0 à < 0,5 |
| Sb₂O₃ | 0 à < 7 |
| SiO₂ | 24 à 44 |
| SnO₂ | 0 à < 4 |
| SrO | 0 à < 2,5 |
| TiO₂ | 5 à 28 |
| V₂O₅ | 0 à 13 |
| ZnO | 0 à < 0,5 |
| ZrO₂ | 0 à 1 |
| Bi₂O₃ | 0 à 19. |

2. Traversée selon la revendication 1, **caractérisée en ce que** dans le verre d'étanchéité formé par un verre de titanate, la teneur des composants suivants en pourcentage du poids d'oxyde, seuls ou dans une combinaison quelconque, est de :
| | |
|---|---|
| Al₂O₃ | 0 à < 2 |
| SrO | 0 à < 2 |
| V₂O₅ | > 5 à 13 |
| Bi₂O₃ | 0 à 18. |

3. Traversée selon la revendication 1, **caractérisée en ce que** le verre d'étanchéité formé par un verre de titanate contient les composants suivants, en pourcentage du poids d'oxyde, ou en est composé :
| | |
|---|---|
| B₂O₃ | 0 à < 3 |
| Li₂O | 1 à 3 |
| Al₂O₃ | 0 à < 2 |
| BaO | 0 à 4 |
| CaO | 0 à 1 |
| CuO | 0 à < 6 |
| Fe₂O₃ | 0 à < 0,5 |
| K₂O | 10 à 20 |
| MgO | 0 à < 0,5 |
| Na₂O | 12 à 20 |
| Nb₂O₃ | 0 à < 0,5 |
| P₂O₅ | 1 à 3 |
| PbO | 0 à < 0,5 |
| SO₃ | 0 à < 0,5 |
| Sb₂O₃ | 0 à < 0,5 |
| SiO₂ | 28 à 37 |
| SnO₂ | 0 à < 0,5 |
| SrO | 0 à < 0,5 |
| TiO₂ | 13 à 28 |
| V₂O₅ | > 5 à 10 |
| ZnO | 0 à < 0,5 |
| ZrO₂ | 0 à < 0,5 |
| Bi₂O₃ | 0 à 18. |

4. Traversée selon l'une des revendications 1 à 3, **caractérisée en ce que** le conducteur, en particulier le conducteur sensiblement en forme de broche, contient un métal léger et/ou un alliage de métaux légers, de préférence de l'aluminium ou un alliage d'aluminium, ou en est composé
ou
contient du cuivre, du CuSiC, un alliage de cuivre, de l'or, un alliage d'or, de l'argent, un alliage d'argent, du NiFe, une enveloppe de NiFe avec un intérieur en cuivre ou un alliage de cobalt et de fer, de préférence du cuivre ou un alliage de cuivre, ou en est composé.

5. Traversée selon l'une des revendications 1 à 4, **caractérisée en ce que** le verre d'étanchéité possède un coefficient de dilatation α dans la plage de 20 °C à 300 °C compris entre 17 x 10-⁶/K et 25 x 10⁻⁶/K et de préférence une température de transformation Tg comprise entre 300 et 500 °C.

6. Traversée selon l'une des revendications précédentes, **caractérisée en ce que** le métal léger et/ou l'alliage de métaux légers sont soumis à un ou plusieurs procédés de prétraitement et/ou revêtements avant la formation de la liaison par solidarité de matière, de préférence à un traitement de surface, en particulier choisi parmi un dégraissage, l'élimination de la couche d'oxyde adhérente en surface, un chromatage, un phosphatage, un revêtement avec un silicate, un revêtement avec un oxyde de titane ou un revêtement avec un oxyde de zirconium.

7. Traversée selon l'une au moins des revendications précédentes, **caractérisée en ce que** le matériau isolant électrique à travers lequel passe l'au moins un conducteur, de préférence un conducteur sensiblement en forme de broche, présente une structure en plusieurs couches, la couche du dessus et/ou la couche du dessous de la structure en plusieurs couches, de préférence les deux couches, contenant un verre d'étanchéité tel qu'il est défini dans la revendication 1, 2 ou 3 ou en étant composées.

8. Traversée selon la revendication 7, **caractérisée en ce qu'**il existe une structure en plusieurs couches avec au moins trois couches, la couche du dessus et/ou la couche du dessous contenant un verre d'étanchéité tel qu'il est défini dans la revendication 1, 2 ou 3 ou en étant composées et une couche intermédiaire contenant un verre phosphaté ou en étant composée, le verre phosphaté contenant de préférence les composants suivants, en pourcentage molaire, ou en étant composé :
| | |
|---|---|
| P₂O₅ | 35-50 % mol., en particulier 39-48 % mol. |
| Al₂O₃ | 0 à 14 % mol., en particulier 2 à 12 % mol. |
| B₂O₃ | 2 à 10 % mol., en particulier 4 à 8 % mol. |
| Na₂O | 0 à 30 % mol., en particulier 0 à 20 % mol. |
| M₂O | 0 à 20 % mol., en particulier 12 à 20 % mol., où M = K, Cs ou Rb |
| PbO | 0 à 10 % mol., en particulier 0 à 9 % mol. |
| Li₂O | 0 à 45 % mol., en particulier 0 à 40 % mol., de préférence 17 à 40 % mol. |
| BaO | 0 à 20 % mol., en particulier 0 à 20 % mol., de préférence 5 à 20 % mol. |
| Bi₂O₃ | 0 à 10 % mol., en particulier 1 à 5 % mol., de préférence 2 à 5 % mol. |

9. Traversée selon l'une des revendications 1 à 6, **caractérisée en ce que** le matériau isolant électrique à travers lequel passe l'au moins un conducteur, de préférence un conducteur sensiblement en forme de broche, contient au moins deux matériaux à base de verre ou de vitrocéramique, un premier matériau à base de verre ou de vitrocéramique et un deuxième matériau à base de verre ou de vitrocéramique, ayant des coefficients de dilatation thermique α (20 °C à 300 °C) différents,
le premier matériau à base de verre ou de vitrocéramique étant choisi de telle sorte que le coefficient de dilatation thermique α₁ du premier matériau à base de verre ou de vitrocéramique soit adapté au coefficient de dilatation thermique du matériau du corps et
le deuxième matériau à base de verre ou de vitrocéramique étant choisi de telle sorte que le coefficient de dilatation thermique α₂ (20 °C à 300 °C) du deuxième matériau à base de verre ou de vitrocéramique soit adapté au coefficient de dilatation thermique du matériau du conducteur,
et une couche de dessus et/ou une couche de dessus étant prévues, qui contiennent un verre d'étanchéité tel qu'il est défini dans la revendication 1, 2 ou 3 ou en sont composées.

10. Traversée selon la revendication 9, **caractérisée en ce que** le coefficient de dilatation thermique du premier matériau à base de verre ou de vitrocéramique est compris entre 16 et 25 x 10⁻⁶K⁻¹ dans la plage de 20 °C à 300 °C, le premier matériau à base de verre ou de vitrocéramique étant de préférence un matériau à base de verre choisi parmi les matériaux à base de verre suivants :
silicotitanates
sulfophosphates
tellurides
borates
vanadates
fluorures
phosphates
silicates :
tous les matériaux cités, facultativement avec
des charges de remplissage pour l'ajustement de la dilatation des métaux alcalins et/ou alcalinoterreux
des dopants situés dans la plage du maximum d'émission du rayonnement infrarouge, en particulier Fe, Cr Co, V.

11. Traversée selon l'une des revendications 9 ou 10, **caractérisée en ce que** le deuxième matériau à base de verre ou de vitrocéramique présente un coefficient de dilatation thermique α₂ compris entre 12 et 18 x 10⁻⁶K⁻¹ dans la plage de 20 °C à 300 °C.

12. Traversée selon l'une des revendications 9 à 11, **caractérisée en ce que** le matériau isolant électrique à travers lequel passe l'au moins un conducteur, de préférence un conducteur sensiblement en forme de broche, comporte au moins un premier matériau à base de verre ou de vitrocéramique et un deuxième matériau à base de verre ou de vitrocéramique et une structure multicouche, une couche de dessus et/ou une couche de dessous de la structure multicouche contenant un verre d'étanchéité tel qu'il est défini dans la revendication 1, 2 ou 3 ou étant composées de celui-ci, est un verre multicomposant, en particulier une pièce pressée en verre.

13. Dispositif d'accumulation, en particulier batterie, de préférence batterie lithium-ion, accumulateur lithium-ion ou condensateur, avec une traversée selon l'une des revendications 1 à 12.

14. Utilisation de verre de titanate comme verre d'étanchéité dans une traversée selon l'une des revendications 1 à 12 dans un dispositif d'accumulation, en particulier une batterie, de préférence une batterie lithium-ion, un accumulateur lithium-ion ou un condensateur.

15. Utilisation selon la revendication 14, **caractérisée en ce que** le verre d'étanchéité formé par un verre de titanate contient les composants suivants, en pourcentage du poids d'oxyde, ou en est composé :
| | |
|---|---|
| B₂O₃ | 0 à < 3 |
| Li₂O | 0 à 3 |
| Al₂O₃ | 0 à < 2 |
| BaO | 0 à < 11 |
| CaO | 0 à 1 |
| CuO | 0 à < 7 |
| Fe₂O₃ | 0 à < 5 |
| K₂O | 10 à 27 |
| MgO | 0 à < 0,5 |
| Na₂O | 12 à 22 |
| Nb₂O₃ | 0 à < 0,5 |
| P₂O₅ | 0 à 3 |
| PbO | 0 à < 0,5 |
| SO₃ | 0 à < 0,5 |
| Sb₂O₃ | 0 à < 7 |
| SiO₂ | 24 à 44 |
| SnO₂ | 0 à < 4 |
| SrO | 0 à < 2,5 |
| TiO₂ | 5 à 28 |
| V₂O₅ | 0 à 13 |
| ZnO | 0 à < 0,5 |
| ZrO₂ | 0 à 1 |
| Bi₂O₃ | 0 à 13. |

16. Procédé pour la fabrication d'une traversée, en particulier selon l'une des revendications 1 à 12, comprenant les étapes suivantes :
- préparation d'un conducteur, en particulier d'un conducteur sensiblement en forme de broche, et d'un corps qui contient un métal léger et/ou un alliage de métaux légers choisis de préférence parmi l'aluminium, le magnésium, le titane, un alliage d'aluminium, un alliage de magnésium, un alliage de titane ou un alliage AlSiC ou en est composé ;
- préparation du verre d'étanchéité qui contient un verre de titanate ou en est composé, broyage et granulation du verre d'étanchéité et fabrication à partir de celui-ci d'un corps moulé présentant une ouverture convenant pour le conducteur ;
- facultativement, traitement thermique du corps moulé obtenu, éventuellement avec ajout d'un liant ;
- assemblage des pièces pour obtenir une traversée ; et
- traitement thermique formant une liaison par solidarité de matière entre le corps et/ou le conducteur, en particulier le conducteur sensiblement en forme de broche, et le verre d'étanchéité.
